(19) **Europäisches Patentamt / European Patent Office / Office européen des brevets**

(11) **EP 3 043 066 B1**

(12) **EUROPEAN PATENT SPECIFICATION**

(45) Date of publication and mention
of the grant of the patent:
**14.06.2017   Bulletin 2017/24**

(51) Int Cl.:
***F03D 17/00*** *(2016.01)*

(21) Application number: **15180359.0**

(22) Date of filing: **10.08.2015**

(54) **SYSTEM AND METHOD OF DIAGNOSING WIND TURBINE POWER GENERATION FACILITY**

SYSTEM UND VERFAHREN ZUR DIAGNOSE EINER
WINDTURBINENSTROMERZEUGUNGSANLAGE

SYSTÈME ET PROCÉDÉ DE DIAGNOSTIC D'UNE INSTALLATION DE GÉNÉRATION D'ÉNERGIE
ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.01.2015   JP 2015001203**

(43) Date of publication of application:
**13.07.2016   Bulletin 2016/28**

(73) Proprietor: **MITSUBISHI HEAVY INDUSTRIES,
LTD.**
**Tokyo 108-8215 (JP)**

(72) Inventors:
• **MIZOUE, Taketo**
**MINATO-KU, TOKYO, 108-8215 (JP)**

• **ICHINOSE, Hidekazu**
**MINATO-KU, TOKYO, 108-8215 (JP)**
• **IWASAKI, Satoshi**
**MINATO-KU, TOKYO, 108-8215 (JP)**

(74) Representative: **Intès, Didier Gérard André et al**
**Cabinet Beau de Loménie**
**158 rue de l'Université**
**75340 Paris Cedex 07 (FR)**

(56) References cited:
**EP-A1- 2 474 734       WO-A1-2009/016020
US-A1- 2014 163 904**

**Description**

TECHNICAL FIELD

The present disclosure relates to a system and a method of diagnosing a wind turbine power generation facility.

BACKGROUND

To monitor a state of a wind turbine generator, it is known to use a quality engineering method of processing multidimensional information.

For instance, Patent Document 1 discloses a method of evaluating integrity of a diagnosis target using the Mahalanobis-Taguchi method (hereinafter, referred to as the MT method) and an integrity diagnosis apparatus for a wind turbine in which the above method is applied to a wind turbine. In this integrity evaluation method, a diagnosis-target dataset is extracted from a diagnosis-target data file in which a plurality of characteristic values related to a measurement time is stored by characteristic items, and a reference dataset is extracted from a comparative dataset in which characteristic values of a particular characteristic item belong to a predetermined reference range (normal range) which is defined in advance. Then, using the diagnosis-target dataset and the reference dataset, a Mahalanobis distance, which is a state index value indicating a state of the wind turbine, is calculated, and an abnormality of the wind turbine to be diagnosed is determined based on the Mahalanobis distance. Document WO 2009/016020 discloses another statistical method to detect failures in wind turbines using measurement datasets.

Citation List

Patent Literature

Patent Document 1: JP5101396B

SUMMARY

In the method of Patent Document 1, the Mahalanobis distance is calculated for each characteristic item using a diagnosis-target dataset and a reference dataset which include measurement data (characteristic values) of each unit period (e.g. one-minute intervals). Here, when a sampling period of each measurement data is sufficiently shorter than the unit period, the Mahalanobis distance is calculated using the mean value of the entire measurement data obtained in the unit period as the characteristic values of each characteristic item.

In the integrity diagnosis of a wind turbine using a quality engineering method which involves multidimensional information as described above such as the MT method, it is desirable to determine an abnormality with higher accuracy.

In view of the above issues, an object of at least one embodiment of the present invention is to provide a diagnosis system of a wind turbine power generation facility which can determine an abnormality with high accuracy.

(1) A diagnosis system for evaluating integrity of a wind turbine power generation facility according to at least one embodiment of the present invention includes: a dataset acquisition part configured to obtain, for each unit period, a plurality of datasets each constituted by a combination of characteristic values which are indices of a plurality of characteristic items correlated to an operation state of the wind turbine power generation facility; a classification part for classifying at least a part of the plurality of datasets in the unit period into classes of a parameter indicating an output of the wind turbine power generation facility; a mean processing part for averaging the datasets classified into each of the classes by the classification part, and calculating a mean dataset for each of the classes; a deviation index value calculation part for calculating, for each of the classes, a deviation index value indicating a deviation of the mean dataset from a reference dataset which is constituted by a combination of the characteristic values of the time when the wind turbine power generation facility is in a normal state; and an abnormality determination part configured to determine that an abnormality has occurred to the wind turbine power generation facility in the unit period, if the deviation index value is greater than a threshold value in at least one of the classes.

In a case where an abnormality of a wind turbine power generation facility is determined based on a deviation index value indicating a deviation of a time average per a unit period of a dataset from a reference dataset as described in Patent Document 1, possible large dispersion in the characteristic values (e.g. output) included in the dataset is evened by the averaging. In the abnormality determination of a wind turbine power generation facility based on the deviation index value calculated from the dataset averaged as described above, the influence of a relatively large or small characteristic value in the unit period is reduced.

In this regard, in the above configuration (1), the dataset is averaged for each class of a parameter (e.g. output) indicating the output of the wind turbine power generation facility to calculate the deviation index value for each class. Thus, the deviation index value calculated for each class is compared with a threshold value without rounding the dispersion even in a case where the dispersion in the parameter is large in the unit period, which makes it possible to determine an abnormality with high accuracy.

(2) In some embodiments, in the above configuration (1), the reference dataset is classified into the classes of the parameter and averaged in each of the classes of the parameter, and the deviation index value calculation part is configured to calculate, for each of the classes, the deviation index value indicating the deviation of the mean dataset from the reference dataset, the mean dataset and the reference dataset belonging to the same class.

In the above configuration (2), the deviation value index is calculated using the mean dataset and the reference dataset belonging to the same class, from among the mean datasets and the reference datasets averaged for each class. Thus, it is possible to compare data obtained under the same conditions, which enables more precise abnormality determination.

(3) In some embodiments, in the above configuration (1) or (2), the diagnosis system for a wind turbine power generation facility further includes a target-dataset selection part configured to exclude the plurality of datasets belonging to a non-target unit period including datasets which do not satisfy a first determination condition constituted by at least one of following condition (A) or (B), and to select a target dataset which belongs to a target unit period in which all of the datasets satisfy the first determination condition. The classification part is configured to classify only the target dataset from among the plurality of datasets into the classes of the parameter. The condition (A) is a condition that a rotor rotation speed $\omega_r$ of the wind turbine power generation facility is not less than a threshold value $\omega_{r\_th}$, the threshold value $\omega_{r\_th}$ being not less than the rotor rotation speed $\omega_{r0}$ at a cut-in wind velocity and less than the rated rotation speed $\omega_{r\_rated}$. The condition (B) is a condition that a generator rotation speed $\omega_g$ of the wind turbine power generation facility is not less than a threshold value $\omega_{g\_th}$ which is not more than a generator rotation speed $\omega_{g0}$ at connection of a generator to a utility grid.

The characteristic values, which are indices of the characteristic items, may be varied depending on whether the wind turbine power generation facility is being operated. For instance, while the wind turbine is in operation, the rotor rotation speed is a predetermined value or more, and while the wind turbine is stopped, the rotor rotation speed is a predetermined value or less. Further, while the generator of the wind turbine power generation facility is in operation, the generator rotation speed is a predetermined value or more, and while the generator is stopped, the generator rotation speed is a predetermined value or less. Accordingly, a difference in the operation state of the wind turbine power generation facility more or less influences the deviation index value, and thus it is desirable to exclude such influence to determine an abnormality appropriately. In this regard, in the above configuration (3), only the dataset in a case where the operation state of the wind turbine power generation facility is a determined state is selected to calculate the deviation index value, which makes it possible to determine an abnormality appropriately.

(4) In some embodiments, in the above configuration (3), the reference dataset satisfies the at least one of the condition (A) or (B).

In this above configuration (4), the deviation index value is calculated using the target dataset satisfying the condition (A) or (B) and the reference dataset, and only the dataset in a case where the operation state of the wind turbine power generation facility is a determined state is selected to calculate the deviation index value, which makes it possible to determine an abnormality appropriately.

(5) In some embodiments, in the above configuration (3) or (4), the target-dataset selection part is configured to select, as the target dataset, a dataset in the target unit period in which all of the datasets satisfy a second determination condition constituted by at least one of condition (C) or (D) in addition to the first determination condition. The condition (C) is a condition that the wind turbine power generation facility is not under a temporal output limitation. The condition (D) is a condition that a temperature variation rate of a section of the wind turbine power generation facility indicating a temperature change corresponding to the operation state of the wind turbine power generation facility is not more than a threshold value.

The correlation among the characteristic items (e.g. among the generator output, the pitch angles of the wind turbine blades and the rotor rotation speed) may be varied depending on the operation state of the wind turbine power generation facility. For instance, if the wind turbine power generation facility is under a temporal output limitation, the correlation among the characteristic items is different from that in a case where there is no output limitation. Further, immediately after a start of operation of the wind turbine power generation facility, the change rate of the characteristic values (e.g. the temperatures of the components constituting the wind turbine power generation facility) which are indices of the characteristic items are smaller than those at the time of normal operation. Accordingly, a difference in the operation state of the wind turbine power generation facility more or less influences the deviation index value, and thus it is desirable to exclude such influence to determine an abnormality appropriately. In this regard, in the above configuration (5), only the dataset in a case where the operation state of the wind turbine power generation facility is a determined state is selected to calculate the deviation index value, which makes it possible to determine an abnormality appropriately.

(6) In some embodiments, in any one of the above configurations (1) to (5), the deviation index value calculation part is configured to calculate, as the deviation index value, a Mahalanobis distance of a signal space constituted by the target dataset from a unit space constituted by the reference dataset. The abnormality determination part is configured to determine whether an abnormality of the wind turbine power generation facility is present in the target unit period based on the Mahalanobis distance.

In the above configuration (6), the Mahalanobis distance (hereinafter, referred to as "MD value" as well) is calculated based on the reference dataset and the target dataset, and an abnormality of the wind turbine power generation facility is determined based on the Mahalanobis distance. Thus, evaluation taking account of the correlation among a plurality of characteristic items is enabled, as compared to a case where an abnormality is determined using the Euclidean distance.

(7) In some embodiments, in any one of the above configurations (1) to (6), the diagnosis apparatus for a wind turbine power generation facility further includes a contribution-rate calculation part configured to calculate an analysis deviation index value which indicates a deviation of an analysis target dataset constituted by a combination of the characteristic values of the characteristic items other than at least one focused characteristic item among the characteristic values constituting the target dataset from an analysis reference dataset constituted by a combination of the characteristic values of the characteristic items other than the focused characteristic item of the characteristic values constituting the reference dataset, and to calculate a contribution rate of each of the characteristic items with respect to the deviation index value based on a ratio of the analysis deviation index value to the deviation index value; and an abnormality-cause determination part configured to specify the characteristic item being a cause of the abnormality from among the plurality of characteristic items based on the contribution rate calculated by the contribution-rate calculation part, if it is determined that there is the abnormality in the wind turbine power generation facility by the abnormality determination part.

With the above configuration (7), it is possible to calculate the contribution rate of each characteristic item with respect to the deviation index value and to specify the characteristic item that is causing the abnormality based on the concentration rate, which makes it possible to address the abnormality cause appropriately.

(8) In some embodiments, in the above configuration (7), the diagnosis system for a wind turbine power generation facility further includes an MD-component calculation part for calculating a Mahalanobis-distance component of each of the characteristic items based on the Mahalanobis distance calculated by the deviation index value calculation part and the contribution rate of each of the characteristic items calculated by the contribution-rate calculation part; and a display part for displaying a time-series change of the Mahalanobis distance component of each of the characteristic items calculated by the MD-component calculation part.

With the above configuration (8), the time-series change in the Mahalanobis distance of each characteristic item calculated based on the Mahalanobis distance and the contribution rate of each characteristic item is displayed, which makes it possible to recognize visually the Mahalanobis distance component of each characteristic item and the Mahalanobis distance, which is a sum of the Mahalanobis distance components. Thus, it is possible to determine an abnormality of the wind turbine visually.

(9) In some embodiments, in any one of the above configurations (1) to (8), the wind turbine power generation facility further includes a rotor including a plurality of wind turbine blades, a generator configured to be driven by rotation of the rotor, and a drivetrain for transmitting the rotation of the rotor to the generator. The characteristic items include a wind velocity, a transmission-end output of the generator, a rotation speed of the rotor, and pitch angles of the wind turbine blades. The abnormality determination part is configured to determine an abnormality of at least one of the rotor, the drivetrain, or the generator.

With the above configuration (9), it is possible to determine an abnormality of at least one of the rotor, the drivetrain, or the generator of the wind turbine power generation facility based on the deviation index value calculated using the wind velocity, the transmission-end output of the generator, the rotation speed of the rotor, and the pitch angles of the wind turbine blades as the characteristic items.

(10) In some embodiments, in any one of the above configurations (1) to (9), the wind turbine power generation facility further includes a rotor including a plurality of wind turbine blades, a generator configured to be driven by rotation of the rotor, and an actuator for controlling pitch angles of the wind turbine blades. The characteristic items include a temperature of the actuator, a transmission-end output of the generator and an ambient temperature. The abnormality determination part is configured to determine an abnormality of the actuator.

With the above configuration (10), it is possible to determine an abnormality of the actuator for controlling the pitch angles of the wind turbine blades of the wind turbine power generation facility based on the deviation index value calculated using the temperature of the actuator for controlling the pitch angles of the wind turbine blades, the transmission-end output of the generator, and the ambient temperature as the characteristic items.

(11) In some embodiments, in any one of the above configurations (1) to (10), the wind turbine power generation facility further includes a rotor including a plurality of wind turbine blades, a generator configured to be driven by rotation of the rotor, a main shaft connected to the rotor and configured to transmit rotation of the rotor to the generator, and a main bearing configured to support the main shaft rotatably. The characteristic items include a temperature of the main bearing, vibration information of the main bearing and an ambient temperature. The vibration information includes at least one of: an acceleration level of the main bearing defined as a signal strength of a frequency corresponding to an integral multiple of a rotation speed of the main shaft, of a first signal obtained by frequency analysis of an acceleration signal of the main bearing; an envelope-curve level of the main bearing defined as a signal strength of the frequency corresponding to the integral multiple of the rotation speed of the main shaft, of a second signal obtained by frequency analysis of an envelope-curve signal which connects peaks of the acceleration signal of the main bearing; an overall value of a third signal obtained by frequency analysis of a radial speed signal of the main bearing; or an overall value of a fourth signal obtained by frequency analysis of a radial acceleration signal of the main bearing. The abnormality determination part is configured to determine an abnormality of the main bearing.

With the above configuration (11), it is possible to determine an abnormality of the main bearing of the wind turbine power generation facility based on the deviation index value calculated using the temperature of the main bearing, the vibration information of the main bearing and the ambient temperature as the characteristic items.

(12) In some embodiments, in any one of the above configurations (1) to (11), the wind turbine power generation facility further includes a rotor including a plurality of wind turbine blades, a synchronous generator configured to be driven by rotation of the rotor, and an automatic voltage regulator for controlling a terminal voltage of the synchronous generator by adjusting a field current of the synchronous generator. The characteristic items include a temperature of a winding of the synchronous generator, a voltage of the automatic voltage regulator, an electric current of the automatic voltage regulator, a filed voltage of the synchronous generator and an ambient temperature. The abnormality determination part is configured to determine an abnormality of the synchronous generator.

With the above configuration (12), it is possible to determine an abnormality of the synchronous generator of the wind turbine power generation facility based on the deviation index value calculated using the temperature of the winding of the synchronous generator, the voltage of the automatic voltage regulator, the electric current of the automatic voltage regulator, the field voltage of the synchronous generator, and the ambient temperature as the characteristic items.

(13) In some embodiments, in any one of the above configurations (1) to (12), the wind turbine power generation facility further includes a rotor including a plurality of wind turbine blades, and a generator configured to be driven by rotation of the rotor. The characteristic items include a temperature of a generator bearing rotatably supporting a rotation shaft of the generator, vibration information of the generator bearing and an ambient temperature. The vibration information includes at least one of: an acceleration level of the generator bearing defined as a signal strength of a frequency corresponding to an integral multiple of a rotation speed of the rotation shaft of the generator, of a fifth signal obtained by frequency analysis of an acceleration signal of the generator bearing; an envelope-curve level of the generator bearing defined as a signal strength of a frequency corresponding to an integral multiple of the rotation speed of the rotation shaft of the generator, of a sixth signal obtained by frequency analysis of an envelope-curve signal which connects peaks of the acceleration signal of the generator bearing; an overall value of a seventh signal obtained by frequency analysis of a radial speed signal of the generator bearing; or an overall value of an eighth signal obtained by frequency analysis of a radial acceleration signal of the generator bearing. The abnormality determination part is configured to determine an abnormality of the generator bearing.

With the above configuration (13), it is possible to determine an abnormality of the generator bearing of the wind turbine power generation facility based on the deviation index value calculated using the temperature of the generator bearing supporting the rotation shaft of the generator rotatably, the vibration information of the generator bearing, and the ambient temperature as the characteristic items.

(14) In some embodiments, in any one of the above configurations (1) to (13), the dataset acquisition part is configured to obtain the datasets in the unit period of a range of from 1 to 60 minutes, or preferably, of approximately 10 minutes. The deviation index value calculation part is configured to calculate an analysis value including the deviation index value in a range of from 30 to 600 minutes or, preferably, in a period of 60 minutes, using the target dataset selected from the plurality of datasets obtained over the unit period for acquiring the datasets by the target-dataset selection part.

(15) A diagnosis method of evaluating integrity of a wind turbine power generation facility according to at least one embodiment of the present invention includes: a dataset acquisition step of obtaining, for each unit period, a plurality of datasets each constituted by a combination of characteristic values which are indices of a plurality of characteristic items correlated to an operation state of the wind turbine power generation facility; a classification step of classifying at least a part of the plurality of datasets in the unit period into classes of a parameter indicating an output of the wind turbine power generation facility; a mean processing step of averaging the datasets classified into each of the classes in the classification step, and calculating a mean dataset for each of the classes; a deviation index value calculation step of calculating, for each class, a deviation index value indicating a deviation of the mean dataset from a reference dataset which is constituted by a combination of the characteristic values of the time when the wind turbine power generation facility is in a normal state; and an abnormality determination step of determining that an abnormality has occurred to the wind turbine power generation facility in the unit period, if the deviation index value is greater than a threshold value in at least one of the classes.

In the above described method (15), the dataset is averaged for each class of a parameter (e.g. output) indicating the output of the wind turbine power generation facility to calculate the deviation index value for each class. Thus, the deviation index value calculated for each class is compared with a threshold value without rounding the dispersion even in a case where the dispersion in the parameter in the unit period is large, which makes it possible to determine an abnormality (to diagnosis the integrity) with a high accuracy.

According to at least one embodiment of the present invention, provided is a diagnosis system for a wind turbine power generation facility whereby it is possible to diagnosis the integrity precisely.

BRIEF DESCRIPTION OF DRAWINGS

FIG. 1 is a schematic configuration diagram of a wind turbine power generation facility according to one embodiment.
FIG. 2 is a block diagram of a schematic configuration of a diagnosis system of a wind turbine power generation facility according to one embodiment.
FIG. 3 is a table of a set of characteristic items constituting a dataset according to one embodiment.
FIG. 4 is a diagram of classification of a dataset according to one embodiment.
FIG. 5 is a table of an example of an average dataset after classification and averaging.
FIG. 6 is a diagram of an example of elements of a unit space data (a set of reference dataset) being a target of the Mahalanobis-distance calculation.
FIG. 7 is a diagram of an example of elements of a signal space data (a set of average dataset) being a target of the Mahalanobis-distance calculation.
FIG. 8 is a diagram of a result of calculation of a Mahalanobis distance where the dataset illustrated in FIG. 5 is used.
FIG. 9 is a chart for describing a calculation method of a contribution rate.
FIG. 10 is an example of a time-series change of a Mahalanobis-distance component of each characteristic item displayed by a display part according to one embodiment.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

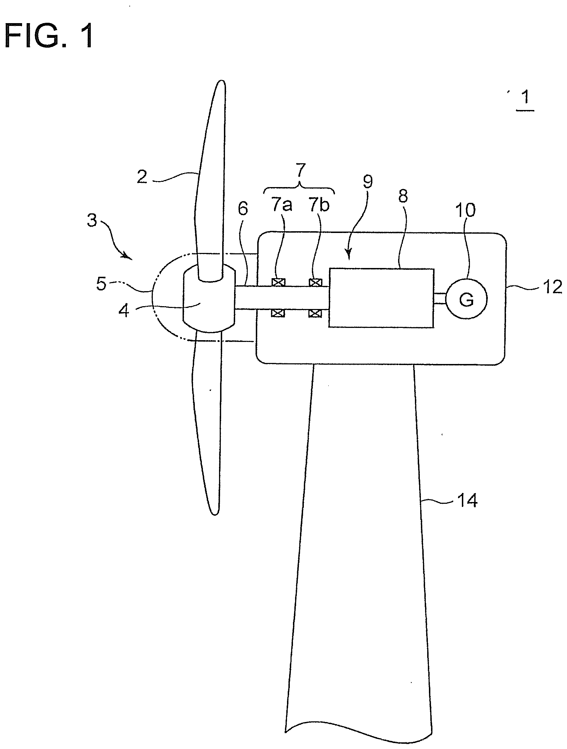

First, the wind turbine power generation facility which is to be diagnosed by a diagnosis system for a wind turbine power generation facility according to one embodiment will be described. FIG. 1 is a schematic configuration diagram of a wind turbine power generation facility according to one embodiment. As illustrated in FIG. 1, the wind turbine power generation facility 1 includes a rotor 3 having a plurality of wind turbine blades 2 and a hub 4 to which the wind turbine blades 2 are mounted, a generator 10 configured to be driven by rotation of the rotor 3, and a drivetrain 9 for transmitting rotation of the rotor 3 to the generator 10. When the wind turbine blades 2 receive wind, the rotor 3 including the wind turbine blades 2 rotates. Rotation energy of the rotor 3 is transmitted to the generator 10 via the drivetrain 9 to be converted into electrical energy by the generator 10.

Here, a variety of devices including the drivetrain 9 may be housed in a nacelle 12 disposed on a tower 14 installed on the water or on the ground. Further, the hub 4 may be covered by a hub cover 5. Further, the generator 10 may be a synchronous generator connected to a utility grid.

The drivetrain 9 includes a main shaft 6 connected to a hub 4 (rotor 3), main bearings 7 (7a, 7b) which support the main shaft 6 rotatably, and a transmission 8 for changing the speed of rotation of the rotor 3 and transmitting the rotation to the generator 10. The transmission 8 may be a hydraulic transmission including a hydraulic pump and a hydraulic motor. Alternatively, the transmission 8 may be a mechanical-type (gear type) speed increasing unit configured to increase the rotation speed of the main shaft 6 and output the rotation to the generator 10.

In one embodiment, the wind turbine power generation facility 1 may be a direct-drive type wind turbine generator in which the generator 10 is driven by rotation of the main shaft 6 without a drivetrain being interposed.

In one embodiment, the wind turbine power generation facility 1 further includes an actuator (not illustrated) for controlling pitch angles of the wind turbine blades 2. The actuator may be an electric pitch motor, or a hydraulic actuator using a hydraulic cylinder.

In one embodiment, the generator 10 is a synchronous generator, and the wind turbine power generation facility 1 further includes an automatic voltage regulator (not illustrated) for regulating the field current of the synchronous generator (generator 10) to control the terminal voltage of the synchronous generator (generator 10).

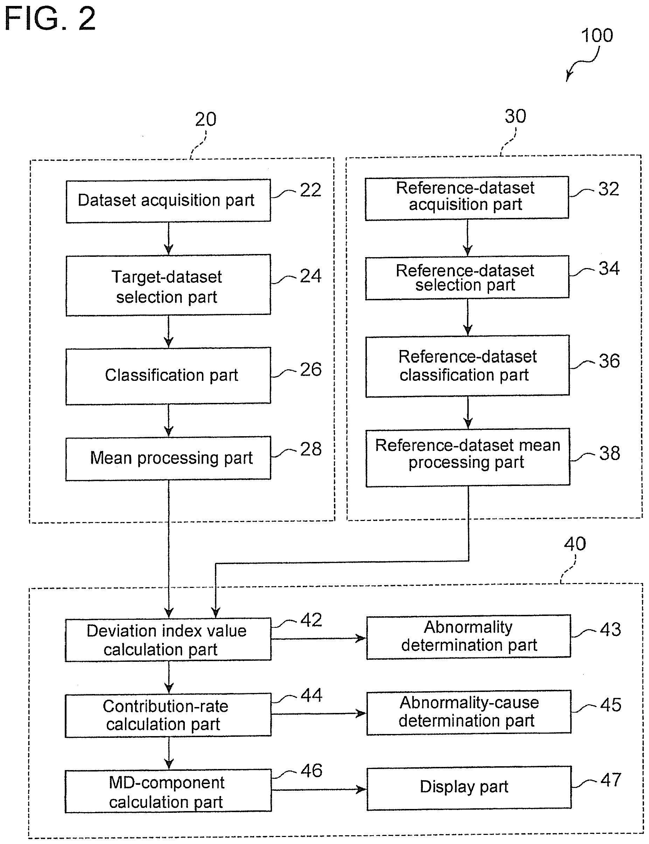

Next, a diagnosis system of a wind turbine power generation facility according to one embodiment will be described. FIG. 2 is a block diagram of a schematic configuration of a diagnosis system of a wind turbine power generation facility according to one embodiment. As illustrated in FIG. 2, the diagnosis system 100 for a wind turbine power generation facility includes a dataset generation part 20 and a reference-dataset generation part 30 for generating datasets used to calculate a deviation index value for evaluating integrity of the wind turbine power generation facility 1, and an integrity evaluation part 40 for determining whether an abnormality of the wind turbine power generation facility 1 is present based on the calculated variation index.

The dataset generation part 20 includes a dataset acquisition part 22, a target-dataset selection part 24, a classification part 26, and a mean processing part 28.

The reference-dataset generation part 30 includes a reference-dataset acquisition part 32, a reference-dataset selection part 34, a reference-dataset classification part 36, and a reference-dataset mean processing part 28.

The integrity evaluation part 40 includes a deviation index value calculation part 42, an abnormality determination part 43, a contribution-rate calculation part 44, an abnormality-cause determination part 45, an MD component calculation part 46, and a display part 47.

Described below with drawings is each part of the diagnosis system 100 according to an embodiment in which the Mahalanobis distance is calculated as the deviation index value.

The dataset generation part 20 is configured to generate a dataset which constitutes a signal space in calculation of the Mahalanobis distance (deviation index value) for evaluating integrity of the wind turbine power generation facility 1.

The dataset acquisition part 22 is configured to obtain a plurality of datasets for every unit period Ti (i = 1, 2, and so on). Each dataset includes a combination of characteristic values which are indices of a plurality of characteristic items correlated to an operation state of the wind turbine power generation facility 1.

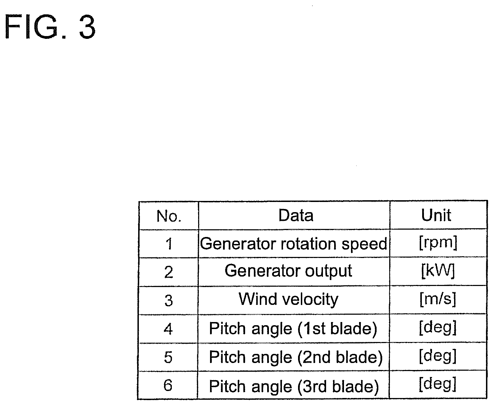

FIG. 3 is a table of a set of characteristic items constituting a dataset according to one embodiment. As illustrated in the drawing, in one embodiment, a dataset is constituted by six kinds of characteristic items: generator rotation speed; generator output (output of a transmission end of the generator 10); wind velocity; and the pitch angles of the respective three wind turbine blades 2 (the first to third blades).

The characteristic values being indices of the respective characteristic items are typically measurement values of the respective characteristic items.

In a case where the sampling period is varied between the characteristic items, the number of data in a unit period may be the same for all of the characteristic items. For instance, if the longest sampling period among the plurality of characteristic items is one minute, for other characteristic items having a sampling period shorter than one minute, a dataset may be constituted by one-minute mean values which are calculated from measurement values measured in one minute.

A plurality of characteristic items can be optionally selected in accordance with a diagnosis target.

For instance, in a case where the rotor 3, the drivetrain 9, or the generator 10 is the target of abnormality determination, the characteristic items may be the wind velocity, the transmission end output of the generator 10, the rotation speed of the rotor 3, and the pitch angles of the plurality of wind turbine blades 2 (the first to third blades).

Further, for instance, in a case where an actuator for controlling the pitch angles of the wind turbine blades 2 is the target of abnormality determination, the characteristic items may be the temperature of the actuator, the transmission-end output of the generator 10, and the ambient temperature.

Further, for instance, in a case where the main bearings 7 (7a, 7b) of the wind turbine power generation facility 1 is the target of abnormality determination, the temperature of the main bearings 7 (7a, 7b), the vibration information of the main bearings 7 (7a, 7b) and the ambient temperature.

The vibration information of the main bearings 7 (7a, 7b) may be one of the following or may include two or more of the following: an acceleration level of the main bearing defined as a signal strength of a frequency corresponding to an integral multiple of the rotation speed of the main shaft 6, of the first signal obtained by frequency analysis of acceleration signals of the main bearing; an envelope-curve level of the main bearing defined by a signal strength of a frequency corresponding to an integral multiple of the rotation speed of the main shaft 6, of the second signal obtained by frequency analysis of an envelope signal connecting peaks of the acceleration signal of the main bearing; an overall value of the third signal obtained by frequency analysis of a radial velocity signal of the main bearing; or an overall value of the fourth signal obtained by frequency analysis of a radial acceleration signal of the main bearing.

Further, for instance, in a case where the synchronous generator (generator 10) is the target of abnormality determination, the characteristic items may be the winding temperature of the synchronous generator (generator 10), the voltage of the automatic voltage regulator, the current of the automatic voltage regulator, the field voltage of the synchronous generator (generator 10), and the ambient temperature.

Further, for instance, in a case where a generator bearing for rotatably supporting a rotation shaft of the generator 10 is the target for abnormality determination, the characteristic items may be the temperature of the generator bearing, the vibration information of the generator bearing and the ambient temperature.

The vibration information of the generator bearing may be one of the following or may include two or more of the following: an acceleration level of the generator bearing defined as a signal strength of a frequency corresponding to an integral multiple of the rotation speed of the rotation shaft of the generator 10, of the fifth signal obtained by frequency analysis of an acceleration signal of the generator bearing; an envelope-curve level of the generator bearing defined by a signal strength of a frequency corresponding to an integral multiple of the rotation speed of the rotation shaft of the generator 10, of the sixth signal obtained by frequency analysis of an envelope signal connecting peaks of the acceleration signal of the generator bearing; an overall value of the seventh signal obtained by frequency analysis of a radial velocity signal of the generator bearing; or an overall value of the eighth signal obtained by frequency analysis of a radial acceleration signal of the generator bearing.

The dataset including a combination of a plurality of characteristic values is obtained for each unit period $T_i$. The length of the unit period $T_i$ is, for instance, a period of a range of from 1 to 60 minutes. The length of each unit period $T_i$ is, for instance, 10 minutes.

When there is a dataset not satisfying a target-dataset determination condition in the plurality of datasets obtained for each unit period $T_i$ by the dataset acquisition part 22, the target-dataset selection part 24 regards the unit period $T_i$ including the dataset as a non-target unit period, and excludes every dataset belonging to the non-target unit period. In contrast, when all of the plurality of datasets obtained for each unit period $T_i$ by the dataset acquisition part 22 satisfy the target-dataset determination condition, the target-dataset selection part 24 regards the unit period $T_i$ as a target unit period, and selects the plurality of datasets included in the target unit period as target datasets.

Since a difference in the operation state of the wind turbine power generation facility 1 influences the deviation index value more or less, it is desirable to determine an abnormality appropriately excluding such influence. In this regard, it is possible to determine an abnormality appropriately by calculating the deviation index value so that only the dataset in a case where the operation state of the wind turbine power generation facility 1 is the predetermined operation state is selected by the target-dataset selection part 24 as described above.

The target-dataset determination condition for the target-dataset selection part 24 to select a target dataset is the first determination condition including at least one of the following condition (A) or (B).

Condition (A): the rotor rotation speed $\omega_r$ of the wind turbine power generation facility 1 is and not less than a threshold value $\omega_{r\_th}$, the threshold value $\omega_{r\_th}$ being not less than the rotor rotation speed $\omega_{r0}$ at a cut-in wind velocity and less than the rated rotation speed $\omega_{r\_rated}$.

Condition (B): the generator rotation speed $\omega_g$ of the wind turbine power generation facility 1 is not less than a threshold value $\omega_{g\_th}$ which is not more than the generator rotation speed $\omega_{g0}$ at connection of the generator to the utility grid.

That is, the condition (A) excludes data other than that during operation of the wind turbine power generation facility 1 from the target dataset. Also, the condition (B) excludes data other than that during operation of the generator 10 from the target dataset.

In one embodiment, the target-dataset determination condition for the target-dataset selection part 24 to select the target dataset includes the second determination condition in addition to the first determination condition. The second determination condition includes at least one of the following conditions (C) or (D). In another embodiment, the target-dataset determination condition for the target-dataset selection part 24 to select the target dataset is the second determination condition includes at least one of the following conditions (C) or (D).

Condition (C): the wind turbine power generation facility 1 is not under a temporal output limitation.

Condition (D): a temperature change rate of a section of the wind turbine power generation facility 1 which indicates a temperature change corresponding to the operation state of the wind turbine power generation facility 1 is not more than a threshold value.

That is, the condition (C) excludes, from the target dataset, the data in a case where the wind turbine power generation facility 1 is under a temporal output limitation and, for instance, correlations between characteristic items such as the generator output, the pitch angles of the wind turbine blades and the rotor rotation speed have changed from those before the output limitation. Further, the condition (D) excludes, from the target dataset, the data of a period in which a specific temperature change occurs on a section (for instance, winding of the generator or the generator bearing) of the wind turbine power generation facility 1, which occurs only immediately after a start of operation of the wind turbine power generation facility 1.

The classification part 26 is configured to classify the dataset selected as the target dataset by the target-dataset selection part 24 from the plurality of datasets in the unit period $T_i$ into classes of a parameter which indicates the output of the wind turbine power generation facility 1. The classification makes it possible to calculate the Mahalanobis distance from the reference dataset (constituting the unit space) and the target dataset (constituting the signal space) which belong to the same class, and thus to compared the data obtained under the same condition, which makes it possible to determine an abnormality more accurately.

The classification by the classification part 26 may be performed by focusing on one of the characteristic items which indicates the output of the wind turbine power generation facility 1, such as "wind velocity", "generator output", or "rotor rotation speed". In a case where the plurality of characteristic items illustrated in FIG. 3 is used to determine an abnormality of the wind turbine power generation facility 1, it is possible to perform the classification by focusing on, for instance, "generator output".

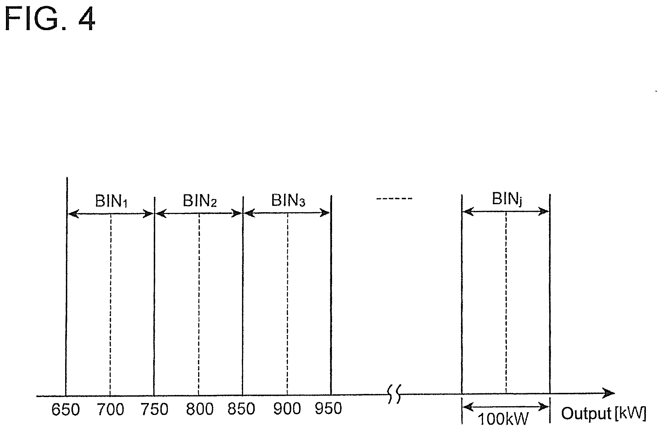

FIG. 4 is a diagram of classification of a dataset according to one embodiment, and the classification can be used when the characteristic items in FIG. 3 are used in evaluation.

In one embodiment, as illustrated in FIG. 4, $BIN_j$ (j = 1 to n) divided into regions having regular widths is set for the generator output (horizontal axis). In the example illustrated in FIG. 4, BIN is set for every region of 100kW, and each region of the generator output is assigned to corresponding one of the BIN (class) such as $BIN_1$ (650 to 750kW), $BIN_2$(750 to 850kW), and $BIN_3$(850 to 950kW).

Each target dataset is assigned to a $BIN_i$ in accordance with the characteristic value (measurement value) of the characteristic item "generator output" included in each dataset (In other words, classification is performed focusing on the generator output).

The mean processing part 28 averages the target dataset classified into each class by the classification part 26 for each unit period $T_i$, and calculates the mean dataset $D_{ij}$ for each class ($BIN_i$). That is, for each class, a mean value is obtained for each one of the characteristic values which indicate the characteristic items in the target dataset, and the mean dataset $D_{ij}$ constituted by a combination of mean values of the respective characteristic values is calculated for each unit period $T_i$ and for each class ($BIN_i$).

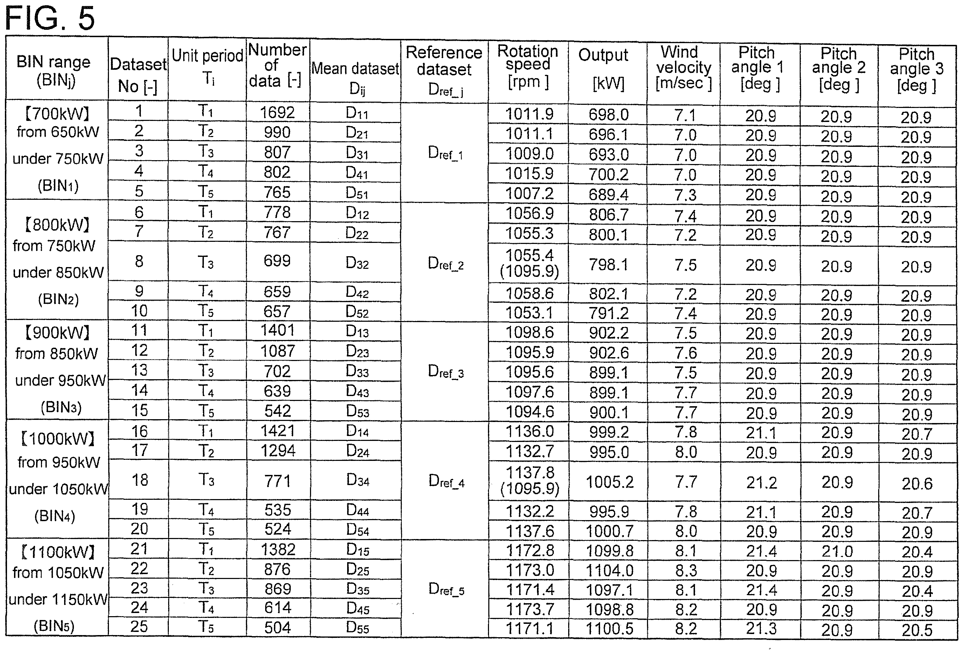

FIG. 5 is a table of an example of a plurality of mean datasets $D_{ij}$ obtained by repeating the processes of the dataset acquisition part 22, the target-dataset selection part 24, the classification part 26 and the mean processing part 28.

The table of FIG. 5 is obtained as follows.

First, the dataset acquisition part 22 obtains a dataset including the six characteristic items (the generator rotation speed, the generator output, the wind velocity and the pitch angles of the first to third blades) illustrated in FIG. 3 over a unit period Ti ($T_1$ to $T_5$). Here, the length of each unit period $T_1$ to $T_5$ is 10 minutes.

Next, the classification part 26 classifies the obtained dataset by each $BIN_i$ illustrated in FIG. 4. $BIN_i$ is a class classified by the generator output, and the width of each $BIN_i$ is 100kW.

The mean processing part 28 calculates a mean value (mean per 10 minutes) by each unit period $T_i$ for the dataset classified into $BIN_i$ to obtain the mean dataset $D_{ij}$ ($D_{11}$ to $D_{55}$). Each mean dataset $D_{ij}$ ($D_{11}$ to $D_{55}$) is constituted by a combination (represented by every row) of the characteristic values of the six characteristic items.

Each mean datasets $D_{ij}$ obtained as described above is used to calculate the Mahalanobis as a dataset constituting the signal space by a deviation index value calculation part 42, which will be described below. The deviation index value calculation part 42 calculates the Mahalanobis distance for each mean dataset $D_{ij}$ obtained as described above.

The reference dataset generation part 30 is configured to generate a dataset (reference dataset) constituting a unit space in calculation of the Mahalanobis distance (deviation index value) for evaluating integrity of the wind turbine power generation facility 1. The reference dataset is a combination of the characteristic values of the time when the wind turbine power generation facility is in a normal state, among combinations of characteristic values of the same characteristic items as those of the above mean datasets $D_{ij}$.

The reference dataset acquisition part 32 is configured to obtain, for each unit period $T_i$, a plurality of datasets constituted by characteristic values which are indices of the plurality of characteristic items constituting the datasets obtained by the dataset acquisition part 22.

When the datasets obtained by the dataset acquisition part 22 are constituted by the characteristic items illustrated in FIG. 3, the reference dataset obtained by the reference-dataset acquisition part 32 is also constituted by the characteristic items illustrated in FIG. 3.

The reference-dataset selection part 34 selects a dataset which is a combination of the characteristic values of the time when the wind turbine power generation facility 1 is in a normal state from among the plurality of datasets obtained for each unit period Ti by the reference-dataset acquisition part 32. That is, only the datasets in which the characteristic value of each characteristic item is in a range indicating that the wind turbine power generation facility is normal are selected, and the other datasets are excluded.

Further, similarly to the target-dataset selection part 24, when a dataset not satisfying a reference-dataset determination condition is included in the plurality of datasets obtained for each unit period Ti by the reference-dataset acquisition part 32, the reference-dataset selection part 34 regards the unit period Ti including the dataset as a non-target unit period, and excludes all datasets belonging to the non-target unit period. In contract, when all of the datasets obtained by the reference-dataset acquisition part 32 for each unit period Ti satisfy the reference-dataset determination condition, the reference-dataset selection part 34 regards the unit period Ti as the target unit period and selects the datasets included in the target unit period.

Selection by the reference-dataset selection part 34 makes it possible to calculate the deviation index value using a target dataset and a reference dataset satisfying the same condition. As a result, it is possible to compare data obtained under the same condition, which makes it possible to determine an abnormality more precisely.

The reference-dataset determination condition for the reference-dataset selection part 34 to select the dataset is the same as the above target-dataset determination condition, which is the first determination condition including at least one of the following conditions (A) or (B) in the present embodiment.

Condition (A): the rotor rotation speed $\omega_r$ of the wind turbine power generation facility 1 is not less than a threshold value $\omega_{r\_th}$, the threshold value $\omega_{r\_th}$ being not less than the rotor rotation speed $\omega_{r0}$ at a cut-in wind velocity and less than the rated rotation speed $\omega_{r\_rated}$.

Condition (B): the generator rotation speed $\omega_g$ of the wind turbine power generation facility 1 is not less than a threshold value $\omega_{g\_th}$ which is not more than the generator rotation speed $\omega_{g0}$ at connection of the generator to the utility grid.

In one embodiment, the reference-dataset determination condition for the reference-dataset selection part 34 to select the target dataset includes the second determination condition in addition to the first determination condition. The second determination condition includes at least one of the following conditions (C) or (D). In another embodiment, the reference-dataset determination condition for the reference-dataset selection part 34 to select the target dataset includes the second determination condition including at least one of the following conditions (C) or (D).

Condition (C): the wind turbine power generation facility 1 is not under a temporal output limitation.

Condition (D): a temperature change rate of a section of the wind turbine power generation facility 1 which indicates a temperature change corresponding to the operation state of the wind turbine power generation facility 1 is not more than a threshold value.

The reference-data classification part 36 is configured to classify the dataset selected by the reference-dataset selection part 34 from the plurality of datasets in the unit period $T_i$. into classes of a parameter which indicates the output of the wind turbine power generation facility 1. The setting of the classes in the classification is similar to that of the classification part 26.

Specifically, in the present embodiment, similarly to the classification by the classification part 26, $BIN_j$ (j = 1 to n) divided into regions having regular widths (100kW) is set for the generator output (horizontal axis) as illustrated in FIG. 4. Each target dataset selected by the reference-dataset selection part 34 is assigned to one of $BIN_i$ in accordance with the characteristic value (measurement value) of the characteristic item "generator output" included in each dataset (In other words, classification is performed focusing on the generator output).

The reference-dataset mean processing part 38 averages the dataset classified into each class by the reference-dataset classification part 36 for each unit period $T_i$, and calculates the mean reference dataset $SD_{ij}$ for each class ($BIN_i$). That is, for each class, a mean value is obtained for each one of the characteristic values which are indices of the characteristic items in the target dataset, and the mean reference dataset $SD_{ij}$ constituted by a combination of mean values of the respective characteristic values is calculated for each unit period $T_i$ and for each class ($BIN_i$).

By repeating the processes of the above described reference-dataset acquisition part 32, the reference-dataset selection part 34, the reference-dataset classification part 36 and the reference-dataset mean processing part 38 as well as accumulating the mean reference datasets $SD_{ij}$ over a plurality of data periods $T_i$, it is possible to obtain a reference dataset $D_{ref\_i}$ for each $BIN_i$.

The set of data illustrated in FIG. 5 may be used as a reference dataset. In this case, the dataset calculated as the mean datasets $D_{ij}$ can be used as the mean dataset $SD_{ij}$, and the accumulation of the mean reference-datasets $SD_{ij}$ over the unit periods $T_1$ to $T_5$ is used as the reference dataset $D_{ref\_i}$ in each $BIN_i$.

In the deviation index value calculation part 42 described below, the reference datasets $D_{ref\_i}$ of the respective $BIN_i$ are used to calculate the Mahalanobis distance for each $BIN_i$.

The reference dataset may be one obtained in advance before a start of operation of the wind turbine power generation facility 1 to be diagnosed. In this case, the reference dataset may be a reference dataset obtained at the same site using another wind turbine power generation facility of the same type as the wind turbine power generation facility 1 to be diagnosed.

Alternatively, the reference dataset may be obtained during operation of the wind turbine power generation facility 1 after a start of operation of the wind turbine power generation facility 1 to be diagnosed.

The integrity evaluation part 40 evaluates integrity of the wind turbine power generation facility 1 based on the

mean dataset $D_{ij}$ and the reference dataset $D_{ref\_i}$ obtained by the dataset generation part 20 and the reference dataset generation part 30.

The deviation index value calculation part 42 calculates the Mahalanobis distance $MD_{ij}$ as a deviation index value which indicates a deviation of the mean dataset $D_{ij}$ from the reference dataset $D_{ref\_i}$, constituted by a combination of characteristic values of the time when the wind turbine power generation facility 1 is in a normal state. That is, the deviation index value calculation part 42 calculates the Mahalanobis distance $MD_{ij}$ of the signal space constituted by the mean dataset $D_{ij}$ with respect to the unit space constituted by the reference dataset $D_{ref\_i}$ as the deviation index value. Here, the Mahalanobis distance $MD_{ij}$ indicating the deviation of the mean dataset $D_{ij}$ from the reference dataset $D_{ref\_i}$ belonging to the same $BIN_i$ (class) is calculated for each unit period Ti by each $BIN_i$ (classs).

In the MT method, a uniform group (a set of normal data) with respect to an object is regarded as a unit space, and a distance between the target data from the center of the unit space is obtained as the Mahalanobis distance (MD value). If the MD value is small, the possibility that the target data is normal is high, and if the MD value is large, the possibility that the target data is abnormal is high.

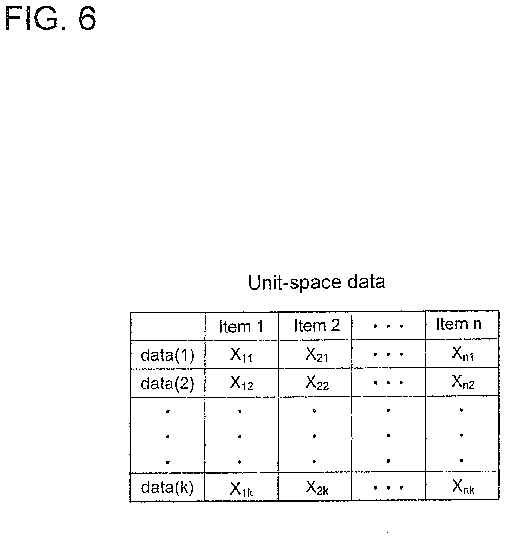

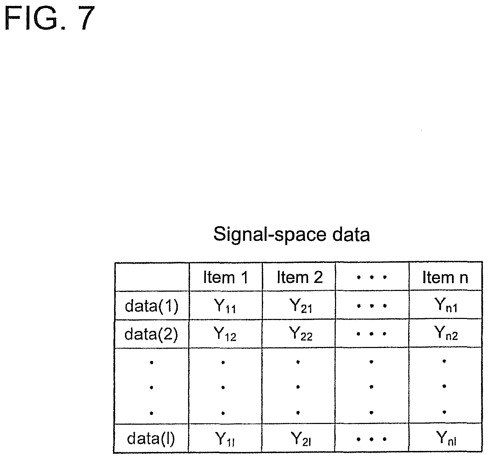

Here, with reference to FIGs. 6 and 7, the method of calculating the Mahalanobis distance will be described. FIG. 6 is a diagram of an example of elements of a unit space data (a set of reference data) being a Mahalanobis-distance calculation target. FIG. 7 is a diagram of an example of elements of a signal space data (a set of mean data) being a Mahalanobis-distance calculation target.

In FIGs. 6 and 7, "Item 1" to "Item n" each represent a characteristic item.

Further, in "data (k)" and "data (l)", "k" and "l" respectively indicate the numbers of the reference dataset and the mean dataset. Specifically, the unit space data in FIG. 6 includes k reference datasets from data (1) to data (k), while the signal space data in FIG. 7 includes 1 mean datasets from data (1) to data (1). Since the Mahalanobis distance is calculated for each mean dataset (signal space data), it is possible to calculate 1 Mahalanobis distances in total, one each for the mean datasets of data (1) to data (1) by using the signal space data in FIG. 7.

Further, $X_{nk}$ and $Y_{nl}$ represent the characteristic values of the respective items (characteristic items) of the respective datasets.

Here, as a premise for calculating the Mahalanobis distance, the number k of datasets constituting the unit space needs to be larger than the number n of the characteristic items (k > n).

The Mahalanobis distance $MD_{ij}$ can be calculated as follows, for instance. First, using the unit space data, the mean $\overline{X}_1$ of each item is obtained from the following equation (A).

$$\overline{X}_i = \frac{1}{k}\sum_k X_{ik} \qquad \cdots \quad (A)$$

Next, using the mean of each item calculated by the above equation (A), the covariance matrix COV (n-by-n matrix) is obtained from the following equation (B).

$$COV_{ij} = \frac{1}{k}\sum_k (X_{ik} - \overline{X}_i)(X_{jk} - \overline{X}_j) \qquad \cdots \quad (B)$$

Then, using the signal space data, data (1) to data (1) as well as a mean obtained by the above equation (A) and an inverse matrix of the covariance matrix obtained by the above equation (B), a square $D^2$ of the Mahalanobis distance is calculated.

$$D^2 = (Y_{1l} - \overline{X}_1 \quad \cdots \quad Y_{nl} - \overline{X}_n)COV^{-1}\begin{pmatrix} Y_{1l} - \overline{X}_1 \\ \vdots \\ Y_{nl} - \overline{X}_n \end{pmatrix} \qquad \cdots \quad (C)$$

Further, to normalize the mean $D^2$ of the unit space data to one, $D^2$ is divided by "n" and the $MD^2$ value is calculated. This $MD^2$ is regarded as the Mahalanobis distance (evaluation value) ($MD^2$ value = $D^2 / n$).

The deviation index value calculation part 42 may calculate the Mahalanobis distance in a range of from 30 minutes to 600 minutes, or preferably in a period of 60 minutes, using the target dataset selected from the plurality of datasets obtained over the dataset acquisition unit period by the target dataset selection part 24.

The abnormality determination part 43 is configured to determine that an abnormality has occurred to the wind turbine power generation facility 1 in the unit period $T_1$ if the Mahalanobis distance $MD_{ij}$ (deviation index value) is greater than a threshold value in at least one class ($BIN_i$).

The abnormality determination part 43 may include a storage part storing a threshold value of the Mahalanobis distance $MD_{ij}$ (deviation index value) in advance. The abnormality determination part 43 may receive information including the Mahalanobis distance calculated by the deviation index value calculation part 42 and compare the Mahalanobis distance to a threshold value store in the storage part, thereby determining that an abnormality has occurred to the wind turbine power generation facility 1 if the calculated Mahalanobis distance is greater than a threshold value.

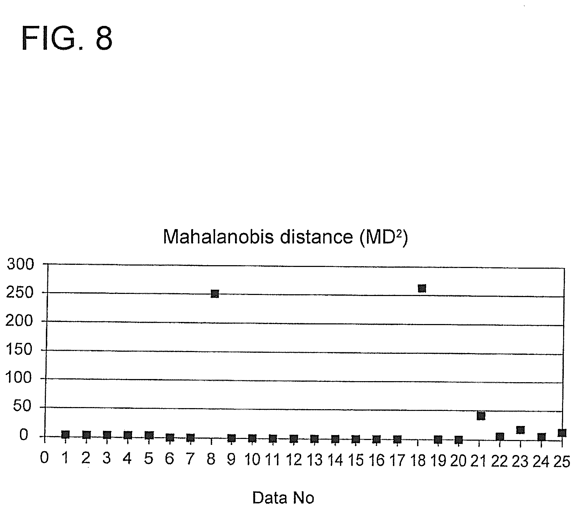

FIG. 8 is a diagram of a result of calculation of a Mahalanobis distance using the dataset illustrated in FIG. 5. In FIG. 8, the horizontal axis is the dataset number, and the vertical axis is the Mahalanobis distance ($MD^2$ value).

Here, the calculation target of the Mahalanobis distance ($MD^2$ value) is each of the datasets No. 1 to 25 in the table of FIG. 5.

For instance, for the datasets No. 1 to 5 belonging to $BIN_1$, the Mahalanobis distance ($MD_2$ value) is calculated using the unit space data constituted by the reference dataset $D_{ref\_1}$ of $BIN_1$. Similarly, for the datasets No. 6 to 10 belonging to $BIN_2$, the Mahalanobis distance ($MD_2$ value) is calculated using the unit space data constituted by the reference dataset $D_{ref\_2}$ of $BIN_2$. For other datasets, the Mahalanobis distance ($MD_2$ value) is calculated accordingly.

Here, the numeral data of each characteristic item (the generator rotation speed and the like) in FIG. 5 is not actually measured values but data prepared for validation. Further, the cells containing the generator rotation speed (merely described as "rotation speed" in the table of FIG. 5) of the datasets No. 8 and 10 are filled with two numbers, one in parentheses and one without parentheses. The number without parentheses is used as an element of a reference dataset constituting the unit space data, while the number in parentheses is used as an element of a mean dataset constituting the signal space data, in calculation of each Mahalanobis distance ($MD^2$ value).

In the graph illustrated in FIG. 8, MD2 values are close to zero and therefore small, except for those of No. 8 and No. 18. The small MD values indicate that the wind turbine power generation facility 1 is normal.

In contrast, the MD2 values calculated from the datasets No. 8 and No. 18 are larger than the Mahalanobis distances calculated from the other datasets. Therefore, it can be determined that an abnormality has occurred to the wind turbine power generation facility 1 in the unit period T3 during which the datasets No. 8 and No. 18 have been obtained.

In a case where the calculation result of the Mahalanobis distance as illustrated in FIG. 8 can be obtained, it is possible to detect an abnormality of the wind turbine power generation facility 1 suitably by setting a threshold value within a range where the Mahalanobis distance ($MD^2$ value) is from 50 to 100 in advance by the abnormality determination part 43.

The contribution-rate calculation part 44 calculates an index (contribution rate) indicating which characteristic item contribute to the Mahalanobis distance calculated by the deviation index value calculation part 42. Further, when it is determined that there is an abnormality in the wind turbine power generation facility 1 by the abnormality determination part 43, the abnormality-cause determination part 45 is configured to determine the characteristic item which has become the cause of the abnormality from among the plurality of characteristic items, based on the contribution rate calculated by the contribution-rate calculation part 44.

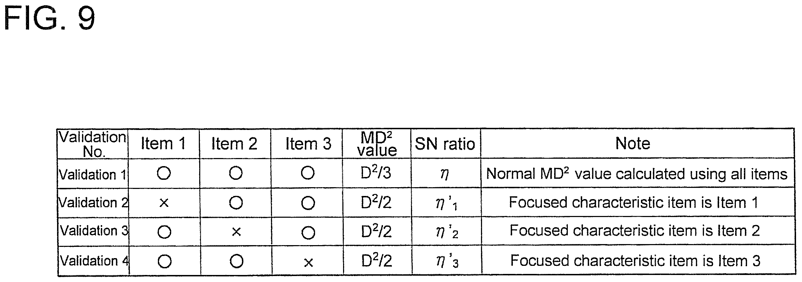

Here, described with reference to FIG. 9 is an example of a method of determining an abnormality cause by calculating a contribution rate in a case where the Mahalanobis distance is calculated using three characteristic items including items 1 to 3. FIG. 9 is a chart for describing a calculation method of a contribution rate. In FIG. 9, circles in the cells of items 1 to 3 of each row of validation indicate that the respective items are used in each validation to calculate the Mahalanobis distance or the analysis Mahalanobis distance described below, while crosses indicate that the respective items are not used in each validation to calculate the Mahalanobis distance or the analysis Mahalanobis distance described below.

First, the Mahalanobis distance ($MD^2$ value) is calculated in accordance with the above method of calculating the Mahalanobis distance using characteristic values of all characteristic items of items 1 to 3 constituting the target dataset and the reference dataset (validation 1 in FIG. 9). At this time, since the number of characteristic items is three, the $MD^2$ value is $D^2/3$.

Further, an analysis Mahalanobis distance (analysis deviation index value) is calculated by setting one focused characteristic item from among the characteristic items and using an analysis reference dataset and an analysis target dataset each constituted by a combination of characteristic values of characteristic items excluding the focused characteristic item from all of the characteristic items (validations 2 to 4 in the table of FIG. 9). For instance, in validation 2, item 1 is set as the focused characteristic item, and the analysis Mahalanobis distance is calculated using the other items: item 2 and item 3. At this time, since the number of characteristic items is two, the $MD^2$ value is $D^2/2$. In validations 3 and 4, the analysis Mahalanobis distance is calculated, respectively setting item 2 and item 3 as the focused characteristic item, and using the other two items.

Then, a contribution rate of each characteristic item with respect to the Mahalanobis distance is calculated based on a ratio of the analysis Mahalanobis distance calculated in validations 2 to 4 to the Mahalanobis distance calculated in validation 1.

For instance, it can be determined that the contribution rate of item 1 is small if the ratio of the Mahalanobis distance calculated in validation 2 with item 1 being the focused characteristic item to the Mahalanobis distance calculated using all of the characteristic items (item 1 to item 3) are large. In contrast, it can be determined that the contribution rate of item 1 is large if the ratio of the Mahalanobis distance calculated in validation 2 with item 1 being the focused characteristic item to the Mahalanobis distance calculated using all of the characteristic items (item 1 to item 3) are small.

Alternatively, the contribution rate may be calculated by obtaining a SN-ratio gain factor for each focused characteristic item. In this case, the SN ratio is obtained from the following equation (D) for each one of the calculated Mahalanobis distances ($MD^2$ values).

$$\eta = -10 \times \log \frac{1}{MD^2 \text{ Values}} \quad \cdot \cdot \cdot \quad ( \text{D} )$$

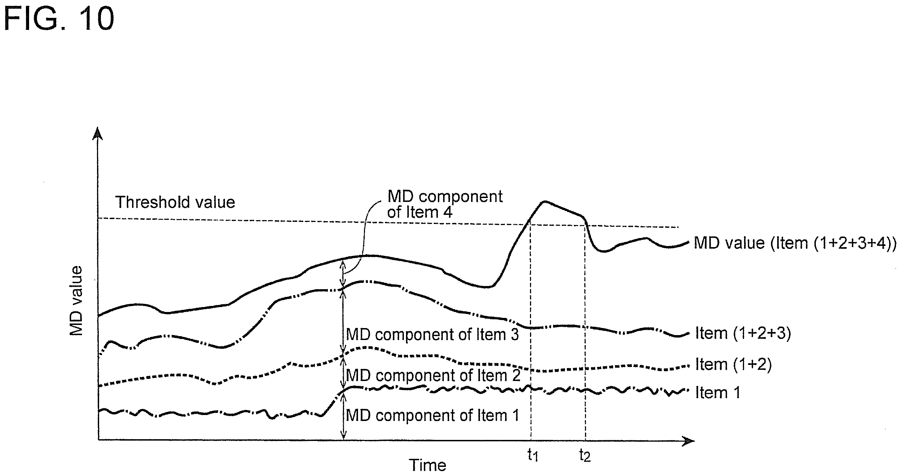

As illustrated in FIG. 10, for validations 1 to 4, the obtained SN ratios are respectively represented as $\eta$, $\eta'_1$, $\eta'_2$, and $\eta'_3$. Then, the SN-ratio gain factor is calculated for each focused characteristic item. In a case where one of item 1, item 2, or item 3 is the focused characteristic item, the SN-ratio gain is respectively $\eta - \eta'_1$, $\eta - \eta'_2$, or $\eta - \eta'_3$.

The SN-ratio gain factors obtained as described above represent the contribution rate of each characteristic item with respect to the Mahalanobis distance. For instance, if the SN-ratio gain is large when the focused characteristic item is item 1, it is indicated that item 1 contributes to an increase in the Mahalanobis distance and may be the cause of an abnormality of the wind turbine power generation facility 1. Further, for instance, if the SN-ratio gain is small when the focused characteristic item is item 2, it is indicated that item 2 does not contribute to the length of the Mahalanobis distance, and may not be the cause of an abnormality of the wind turbine power generation facility 1.

The MD-component calculation part 46 is configured to calculate a Mahalanobis-distance component of each characteristic item based on the Mahalanobis distance calculated by the deviation index value calculation part 42 and the contribution rate of each characteristic item calculated by the contribution-rate calculation part 44. Further, the display part 47 is configured to display a time-series change of the Mahalanobis distance component of each characteristic item calculated by the MD-component calculation part 46.

FIG. 10 is an example of a time-series change of a Mahalanobis-distance component of each characteristic item displayed by a display part 47 according to one embodiment. In the example here, the Mahalanobis distance is calculated by four characteristic items: item 1 to item 4. Further, in FIG. 10, a threshold value of the Mahalanobis distance set in advance is also illustrated.

For instance, in FIG. 10, the Mahalanobis distance is greater than a threshold value in the period in which the time is from $t_1$ to $t_2$. Thus, it can be determined that an abnormality is present in the wind turbine power generation facility 1 in the above period Further, the contribution rate of item 4 is large in the period from $t_1$ to $t_2$, during which an abnormality is determined to be present in the wind turbine power generation facility 1. Thus, it can be determined that item 4 is the cause of the abnormality of the wind turbine power generation facility 1 in time $t_1$ to $t_2$.

Embodiments of the present invention were described in detail above, but the present invention is not limited thereto, and various amendments and modifications may be implemented within a scope that does not depart from the present invention.

Herein, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, an expression of an equal state such as "same" "equal" and "uniform" shall not be construed as indicating only the state in which the feature is strictly equal, but also includes a state in which there is a tolerance or a difference that can still achieve the same function.

Further, an expression herein such as "comprise", "include", "have", "contain" and "constitute" are not intended to be exclusive of other components.

**Claims**

1. A diagnosis system for evaluating integrity of a wind turbine power generation facility (1), **characterized by** comprising:

    a dataset acquisition part (22) configured to obtain, for each unit period, a plurality of datasets each constituted by a combination of characteristic values which are indices of a plurality of characteristic items correlated to an operation state of the wind turbine power generation facility (1);

a classification part (26) configured to classify at least a part of the plurality of datasets in the unit period into classes of a parameter indicating an output of the wind turbine power generation facility (1);

a mean processing part (28) configured to average the datasets classified into each of the classes by the classification part, and calculating a mean dataset for each of the classes;

a deviation index value calculation part (42) configured to calculate, for each of the classes, a deviation index value indicating a deviation of the mean dataset from a reference dataset which is constituted by a combination of the characteristic values of time when the wind turbine power generation facility (1) is in a normal state; and

an abnormality determination part (43) configured to determine that an abnormality has occurred to the wind turbine power generation facility (1) in the unit period, if the deviation index value is greater than a threshold value in at least one of the classes.

2. The diagnosis system for a wind turbine power generation facility (1) according to claim 1,
wherein the reference dataset is classified into the classes of the parameter and averaged in each of the classes of the parameter, and
wherein the deviation index value calculation part (42) is configured to calculate, for each of the classes, the deviation index value indicating the deviation of the mean dataset from the reference dataset, the mean dataset and the reference dataset belonging to the same class.

3. The diagnosis system for a wind turbine power generation facility (1) according to claim 1 or 2, further comprising a target-dataset selection part (24) configured to exclude the plurality of datasets belonging to a non-target unit period including datasets which do not satisfy a first determination condition constituted by at least one of following condition (A) or (B), and to select a target dataset which belongs to a target unit period in which all of the datasets satisfy the first determination condition,
wherein the classification part (26) is configured to classify only the target dataset from among the plurality of datasets into the classes of the parameter,
wherein the condition (A) is a condition that a rotor rotation speed $\omega_r$ of the wind turbine power generation facility (1) is not less than a threshold value $\omega_{r\_th}$, the threshold value $\omega_{r\_th}$ being not less than the rotor rotation speed $\omega_{r0}$ at a cut-in wind velocity and less than the rated rotation speed $\omega_{r\_rated}$, and
wherein the condition (B) is a condition that a generator rotation speed $\omega_g$ of the wind turbine power generation facility (1) is not less than a threshold value $\omega_{g\_th}$ which is not more than a generator rotation speed $\omega_{g0}$ at connection of a generator to a utility grid.

4. The diagnosis system for a wind turbine power generation facility (1) according to claim 3,
wherein the reference dataset satisfies the at least one of the condition (A) or (B).

5. The diagnosis system for a wind turbine power generation facility (1) according to claim 3 or 4,
wherein the target-dataset selection part (24) is configured to select, as the target dataset, a dataset in the target unit period in which all of the datasets satisfy a second determination condition constituted by at least one of condition (C) or (D) in addition to the first determination condition,
wherein the condition (C) is a condition that the wind turbine power generation facility (1) is not under a temporal output limitation, and
wherein the condition (D) is a condition that a temperature variation rate of a section of the wind turbine power generation facility (1) indicating a temperature change corresponding to the operation state of the wind turbine power generation facility is not more than a threshold value.

6. The diagnosis system for a wind turbine power generation facility (1) according to any one of claims 1 to 5,
wherein the deviation index value calculation part (42) is configured to calculate, as the deviation index value, a Mahalanobis distance of a signal space constituted by the target dataset from a unit space constituted by the reference dataset, and
wherein the abnormality determination part (43) is configured to determine whether an abnormality of the wind turbine power generation facility (1) is present in the target unit period based on the Mahalanobis distance.

7. The diagnosis system for a wind turbine power generation facility (1) according to any one of claims 1 to 6, further comprising
a contribution-rate calculation part (44) configured to calculate an analysis deviation index value which indicates a deviation of an analysis target dataset constituted by a combination of the characteristic values of the characteristic items other than at least one focused characteristic item among the characteristic values constituting the target dataset from an analysis reference dataset constituted by a combination of the characteristic values of the characteristic items other than the focused characteristic item of the characteristic values constituting the reference dataset, and to calculate a contribution rate of each of the characteristic items with respect to the deviation index value based on a ratio of the analysis deviation index value to the deviation index value; and

an abnormality-cause determination part (45) configured to specify the characteristic item being a cause of the abnormality from among the plurality of characteristic items based on the contribution rate calculated by the contribution-rate calculation part (44), if it is determined that there is the abnormality in the wind turbine power generation facility (1) by the abnormality determination part (43).

8. The diagnosis system for a wind turbine power generation facility (1) according to claim 7, further comprising:

an MD-component calculation part (46) for calculating a Mahalanobis-distance component of each of the characteristic items based on the Mahalanobis distance calculated by the deviation index value calculation part (42) and the contribution rate of each of the characteristic items calculated by the contribution-rate calculation part (44); and

a display part for displaying a time-series change of the Mahalanobis distance component of each of the characteristic items calculated by the MD-component calculation part (46).

9. The diagnosis system for a wind turbine power generation facility (1) according to any one of claims 1 to 8, wherein the wind turbine power generation facility (1) further includes a rotor (3) including a plurality of wind turbine blades (2), a generator (10) configured to be driven by rotation of the rotor (3), and a drivetrain (9) for transmitting the rotation of the rotor (3) to the generator (10),
wherein the characteristic items include a wind velocity, a transmission-end output of the generator (10), a rotation speed of the rotor (3), and pitch angles of the wind turbine blades (2), and
wherein the abnormality determination part (43) is configured to determine an abnormality of at least one of the rotor (3), the drivetrain (9), or the generator (10).

10. The diagnosis system for a wind turbine power generation facility (1) according to any one of claims 1 to 9, wherein the wind turbine power generation facility (1) includes a rotor (3) including a plurality of wind turbine blades (2), a generator (10) configured to be driven by rotation of the rotor (3), and an actuator for controlling pitch angles of the wind turbine blades (2),
wherein the characteristic items include a temperature of the actuator, a transmission-end output of the generator (10) and an ambient temperature, and
wherein the abnormality determination part (43) is configured to determine an abnormality of the actuator.

11. The diagnosis system for a wind turbine power generation facility (1) according to any one of claims 1 to 10, wherein the wind turbine power generation facility (1) includes a rotor (3) including a plurality of wind turbine blades (2), a generator (10) configured to be driven by rotation of the rotor (3), a main shaft (6) connected to the rotor (3) and configured to transmit rotation of the rotor (3) to the generator (10), and a main bearing (7) configured to support the main shaft (6) rotatably,
wherein the characteristic items include a temperature of the main bearing (7), vibration information of the main bearing (7) and an ambient temperature,
wherein the vibration information includes at least one of:

an acceleration level of the main bearing (7) defined as a signal strength of a frequency corresponding to an integral multiple of a rotation speed of the main shaft (6), of a first signal obtained by frequency analysis of an acceleration signal of the main bearing (7);

an envelope-curve level of the main bearing (7) defined as a signal strength of the frequency corresponding to the integral multiple of the rotation speed of the main shaft (6), of a second signal obtained by frequency analysis of an envelope-curve signal which connects peaks of the acceleration signal of the main bearing (7);

an overall value of a third signal obtained by frequency analysis of a radial speed signal of the main bearing (7); or an overall value of a fourth signal obtained by frequency analysis of a radial acceleration signal of the main bearing (7), and

wherein the abnormality determination part (43) is configured to determine an abnormality of the main bearing (7).

12. The diagnosis system for a wind turbine power generation facility (1) according to any one of claims 1 to 11, wherein the wind turbine power generation facility (1) includes a rotor (3) including a plurality of wind turbine blades (2), a synchronous generator (10) configured to be driven by rotation of the rotor (3), and an automatic voltage regulator for controlling a terminal voltage of the synchronous generator (10) by adjusting a field current of the synchronous generator (10),

wherein the characteristic items include a temperature of a winding of the synchronous generator (10), a voltage of the automatic voltage regulator, an electric current of the automatic voltage regulator, a field voltage of the synchronous generator (10) and an ambient temperature, and

wherein the abnormality determination part (43) is configured to determine an abnormality of the synchronous generator (10).

13. The diagnosis system for a wind turbine power generation facility (1) according to any one of claims 1 to 12, wherein the wind turbine power generation facility (1) includes a rotor (3) including a plurality of wind turbine blades (2), and a generator (10) configured to be driven by rotation of the rotor (3),

wherein the characteristic items include a temperature of a generator bearing rotatably supporting a rotation shaft of the generator (10), vibration information of the generator bearing and an ambient temperature,

wherein the vibration information includes at least one of:

an acceleration level of the generator bearing defined as a signal strength of a frequency corresponding to an integral multiple of a rotation speed of the rotation shaft of the generator, of a fifth signal obtained by frequency analysis of an acceleration signal of the generator bearing;

an envelope-curve level of the generator bearing defined as a signal strength of a frequency corresponding to an integral multiple of the rotation speed of the rotation shaft of the generator (10), of a sixth signal obtained by frequency analysis of an envelope-curve signal which connects peaks of the acceleration signal of the generator bearing;

an overall value of a seventh signal obtained by frequency analysis of a radial speed signal of the generator bearing; or

an overall value of an eighth signal obtained by frequency analysis of a radial acceleration signal of the generator bearing, and

wherein the abnormality determination part (43) is configured to determine an abnormality of the generator bearing.

14. The diagnosis system for a wind turbine power generation facility (1) according to any one of claims 1 to 13, wherein the dataset acquisition part is configured to obtain the datasets in the unit period of a range of from 1 to 60 minutes, or preferably, of approximately 10 minutes, and

wherein the deviation index value calculation part (42) is configured to calculate an analysis value including the deviation index value in a range of from 30 to 600 minutes or, preferably, in a period of 60 minutes, using the target dataset selected from the plurality of datasets obtained over the unit period for acquiring the datasets by the target-dataset selection part.

15. A diagnosis method of evaluating integrity of a wind turbine power generation facility (1), **characterized by** comprising:

a dataset acquisition step of obtaining, for each unit period, a plurality of datasets each constituted by a combination of characteristic values which are indices of a plurality of characteristic items correlated to an operation state of the wind turbine power generation facility (1);

a classification step of classifying at least a part of the plurality of datasets in the unit period into classes of a parameter indicating an output of the wind turbine power generation facility (1);

a mean processing step of averaging the datasets classified into each of the classes in the classification step, and calculating a mean dataset for each of the classes;

a deviation index value calculation step of calculating, for each of the classes, a deviation index value indicating a deviation of the mean dataset from a reference dataset which is constituted by a combination of the characteristic values of the time when the wind turbine power generation facility (1) is in a normal state; and

an abnormality determination step of determining that an abnormality has occurred to the wind turbine power generation facility (1) in the unit period, if the deviation index value is greater than a threshold value in at least one of the classes.

**Patentansprüche**

1. Diagnosesystem zum Beurteilen der Integrität einer Windkraftstromerzeugungsanlage (1), **dadurch gekennzeich-**

**net, dass** es umfasst:

einen Datensatzerfassungsteil (22), der dafür konfiguriert ist, für jede Zeitraumeinheit mehrere Datensätze zu erhalten, die jeweils durch eine Kombination charakteristischer Werte gebildet werden, die Indizes mehrerer charakteristischer Punkte sind, die mit einem Betriebszustand der Windkraftstromerzeugungsanlage (1) korreliert sind,

einen Klassifizierungsteil (26), der dafür konfiguriert ist, mindestens einen Teil der mehreren Datensätze in der Zeitraumeinheit in Klassen eines Parameters zu klassifizieren, der eine Ausgangsleistung der Windkraftstromerzeugungsanlage (1) angibt,

einen Mittelwertverarbeitungsteil (28), der dafür konfiguriert ist, die Datensätze zu mitteln, die durch den Klassifizierungsteil in jede der Klassen klassifiziert wurden, und einen mittleren Datensatz für jede der Klassen berechnet,

einen Abweichungsindexwertberechnungsteil (42), der dafür konfiguriert ist, für jede der Klassen einen Abweichungsindexwert zu berechnen, der eine Abweichung des mittleren Datensatzes von einem Referenzdatensatz angibt, der durch eine Kombination der charakteristischen Werten der Zeit gebildet wird, wenn die Windkraftstromerzeugungsanlage (1) in einem normalen Zustand ist, und

einen Anomaliebestimmungsteil (43), der dafür konfiguriert ist zu bestimmen, dass eine Anomalie in der Windkraftstromerzeugungsanlage (1) in der Zeitraumeinheit aufgetreten ist, wenn der Abweichungsindexwert größer ist als ein Schwellenwert in mindestens einer der Klassen.

2. Diagnosesystem für eine Windkraftstromerzeugungsanlage (1) nach Anspruch 1,
wobei der Referenzdatensatz in die Klassen des Parameters klassifiziert ist und in jeder der Klassen des Parameters gemittelt ist, und
wobei der Abweichungsindexwertberechnungsteil (42) dafür konfiguriert ist, für jede der Klassen den Abweichungsindexwert zu berechnen, der die Abweichung des mittleren Datensatzes von dem Referenzdatensatz angibt, wobei der mittlere Datensatz und der Referenzdatensatz zur selben Klasse gehören.

3. Diagnosesystem für eine Windkraftstromerzeugungsanlage (1) nach Anspruch 1 oder 2, ferner umfassend:

einen Zieldatensatzauswahlteil (24), der dafür konfiguriert ist, die mehreren Datensätze auszuschließen, die zu einer Nicht-Zielzeitraumeinheit gehören, die Datensätze enthält, die eine erste Bestimmungsbedingung nicht erfüllen, die durch mindestens eine der folgenden Bedingung (A) oder (B) gebildet wird, und einen Zieldatensatz auszuwählen, der zu einer Zielzeitraumeinheit gehört, in der alle Datensätze die erste Bestimmungsbedingung erfüllen,

wobei der Klassifizierungsteil (26) dafür konfiguriert ist, nur den Zieldatensatz aus den mehreren Datensätzen in die Klassen des Parameters zu klassifizieren,

wobei die Bedingung (A) eine Bedingung ist, dass eine Rotordrehzahl $\omega_r$ der Windkraftstromerzeugungsanlage (1) nicht kleiner ist als ein Schwellenwert $\omega_{r\_th}$, wobei der Schwellenwert $\omega_{r\_th}$ nicht geringer ist als die Rotordrehzahl $\omega_{r0}$ bei einer Einschaltwindgeschwindigkeit und geringer ist als die Nenndrehzahl $\omega_{r\_rated}$, und

wobei die Bedingung (B) eine Bedingung ist, dass eine Generatordrehzahl $\omega_g$ der Windkraftstromerzeugungsanlage (1) nicht kleiner ist als ein Schwellenwert $\omega_{g\_th}$, der nicht größer ist als eine Generatordrehzahl $\omega_{g0}$ bei Verbindung eines Generators mit einem Energieversorgungsnetz.

4. Diagnosesystem für eine Windkraftstromerzeugungsanlage (1) nach Anspruch 3,
wobei der Referenzdatensatz die mindestens eine der Bedingung (A) oder (B) erfüllt.

5. Diagnosesystem für eine Windkraftstromerzeugungsanlage (1) nach Anspruch 3 oder 4,
wobei das Zieldatensatzauswahlteil (24) dafür konfiguriert ist, als den Zieldatensatz einen Datensatz in der Zielzeitraumeinheit auszuwählen, in der alle Datensätze eine zweite Bestimmungsbedingung, die durch mindestens eine der Bedingung (C) oder (D) gebildet wird, zusätzlich zu der ersten Bestimmungsbedingung erfüllen,
wobei die Bedingung (C) eine Bedingung ist, dass die Windkraftstromerzeugungsanlage (1) keiner zeitlichen Ausgangsleistungsbeschränkung unterliegt, und
wobei die Bedingung (D) eine Bedingung ist, dass eine Temperaturänderungsrate einer Sektion der Windkraftstromerzeugungsanlage (1), die eine Temperaturänderung angibt, die dem Betriebszustand der Windkraftstromerzeugungsanlage entspricht, nicht größer ist als ein Schwellenwert.

6. Diagnosesystem für eine Windkraftstromerzeugungsanlage (1) nach einem der Ansprüche 1 bis 5,
wobei der Abweichungsindexwertberechnungsteil (42) dafür konfiguriert ist, als den Abweichungsindexwert eine Mahalanobis-Distanz eines Signalraums, der durch den Zieldatensatz gebildet wird, anhand einer Raumeinheit, die durch den Referenzdatensatz gebildet wird, zu berechnen, und

wobei der Anomaliebestimmungsteil (43) dafür konfiguriert ist, auf der Basis der Mahalanobis-Distanz zu bestimmen, ob eine Anomalie der Windkraftstromerzeugungsanlage (1) in der Zielzeitraumeinheit vorliegt.

7. Diagnosesystem für eine Windkraftstromerzeugungsanlage (1) nach einem der Ansprüche 1 bis 6, ferner umfassend:

einen Beitragsratenberechnungsteil (44), der dafür konfiguriert ist, einen Analyseabweichungsindexwert zu berechnen, der eine Abweichung eines Analysezieldatensatzes, der durch eine Kombination der charakteristischen Werte der charakteristischen Punkte gebildet wird, die nicht mindestens ein fokussierter charakteristischer Punkt unter den charakteristischen Werten, die den Zieldatensatz bilden, sind, von einem Analysereferenzdatensatz angibt, der durch eine Kombination der charakteristischen Werte der charakteristischen Punkte gebildet wird, die nicht der fokussierte charakteristische Punkt der charakteristischen Werte, die den Referenzdatensatz bilden, sind, und eine Beitragsrate eines jeden der charakteristischen Punkte mit Bezug auf den Abweichungsindexwert anhand eines Verhältnisses des Analyseabweichungsindexwertes zu dem Abweichungsindexwert zu berechnen, und

einen Anomalieursachenbestimmungsteil (45), der dafür konfiguriert ist, den charakteristischen Punkt, der eine Ursache der Anomalie ist, unter den mehreren charakteristischen Punkten auf der Basis der durch den Beitragsratenberechnungsteil (44) berechneten Beitragsrate zu spezifizieren, wenn durch den Anomaliebestimmungsteil (43) wird bestimmt, dass die Anomalie in der Windkraftstromerzeugungsanlage (1) vorliegt.

8. Diagnosesystem für eine Windkraftstromerzeugungsanlage (1) nach Anspruch 7, ferner umfassend:

einen MD-Komponentenberechnungsteil (46) zum Berechnen einer Mahalanobis-Distanzkomponente eines jeden der charakteristischen Punkte auf der Basis der durch den Abweichungsindexwertberechnungsteil (42) berechneten Mahalanobis-Distanz und der durch den Beitragsratenberechnungsteil (44) berechneten Beitragsrate eines jeden der charakteristischen Punkte, und

einen Anzeigeteil zum Anzeigen einer Zeitreihenänderung der Mahalanobis-Distanzkomponente eines jeden der durch den MD-Komponentenberechnungsteil (46) berechneten charakteristischen Punkte.

9. Diagnosesystem für eine Windkraftstromerzeugungsanlage (1) nach einem der Ansprüche 1 bis 8, wobei die Windkraftstromerzeugungsanlage (1) ferner einen Rotor (3), die mehrere Windturbinenflügel (2) enthält, einen Generator (10), der dafür konfiguriert ist, durch die Drehung des Rotors (3) angetrieben zu werden, und einen Antriebsstrang (9) zum Übertragen der Drehung des Rotors (3) zu dem Generator (10) enthält, wobei die charakteristischen Punkte eine Windgeschwindigkeit, eine Übertragungsend-Ausgangsleistung des Generators (10), eine Drehzahl des Rotors (3) und einen Anstellwinkel der Windturbinenflügel (2) enthalten, und wobei der Anomaliebestimmungsteil (43) dafür konfiguriert ist, eine Anomalie von mindestens einem des Rotors (3), des Antriebsstrangs (9) oder des Generators (10) zu bestimmen.

10. Diagnosesystem für eine Windkraftstromerzeugungsanlage (1) nach einem der Ansprüche 1 bis 9, wobei die Windkraftstromerzeugungsanlage (1) einen Rotor (3), der mehrere Windturbinenflügel (2) enthält, einen Generator (10), der dafür konfiguriert ist, durch die Drehung des Rotors (3) angetrieben zu werden, und einen Aktuator zum Steuern der Anstellwinkel der Windturbinenflügel (2) enthält, wobei die charakteristischen Punkte eine Temperatur des Aktuators, einen Übertragungsend-Ausgangsleistung des Generators (10) und eine Umgebungstemperatur enthalten, und wobei der Anomaliebestimmungsteil (43) dafür konfiguriert ist, eine Anomalie des Aktuators zu bestimmen.

11. Diagnosesystem für eine Windkraftstromerzeugungsanlage (1) nach einem der Ansprüche 1 bis 10, wobei die Windkraftstromerzeugungsanlage (1) enthält: einen Rotor (3), der mehrere Windturbinenflügel (2) enthält, einen Generator (10), der dafür konfiguriert ist, durch die Drehung des Rotors (3) angetrieben zu werden, eine Hauptwelle (6), die mit dem Rotor (3) verbunden ist und die dafür konfiguriert ist, die Drehung des Rotors (3) zu dem Generator (10) zu übertragen, und ein Hauptlager (7), das dafür konfiguriert ist, die Hauptwelle (6) drehbar zu stützen, wobei die charakteristischen Punkte eine Temperatur des Hauptlagers (7), Vibrationsinformationen des Hauptlagers (7) und eine Umgebungstemperatur enthalten, wobei die Vibrationsinformationen mindestens eines von Folgendem enthalten:

einen Beschleunigungspegel des Hauptlagers (7), der als eine Signalstärke einer Frequenz, die einem integralen Vielfachen einer Drehzahl der Hauptwelle (6) entspricht, eines ersten Signals definiert ist, das durch Frequenzanalyse eines Beschleunigungssignals des Hauptlagers (7) erhalten wird,

einen Hüllkurvenpegel des Hauptlagers (7), der als eine Signalstärke der Frequenz, die dem integralen Vielfachen der Drehzahl der Hauptwelle (6) entspricht, eines zweiten Signals definiert ist, das durch Frequenzanalyse eines Hüllkurvensignals erhalten wird, das Spitzen des Beschleunigungssignals des Hauptlagers (7) verbindet,

einen Gesamtwert eines dritten Signals, das durch Frequenzanalyse eines Radialgeschwindigkeitsignals des Hauptlagers (7) erhalten wird, oder

einen Gesamtwert eines vierten Signals, das durch Frequenzanalyse eines Radialbeschleunigungssignals des Hauptlagers (7) erhalten wird, und

wobei der Anomaliebestimmungsteil (43) dafür konfiguriert ist, eine Anomalie des Hauptlagers (7) zu bestimmen.

12. Diagnosesystem für eine Windkraftstromerzeugungsanlage (1) nach einem der Ansprüche 1 bis 11,

wobei die Windkraftstromerzeugungsanlage (1) enthält: einen Rotor (3), der mehrere Windturbinenflügel (2) enthält, einen Synchrongenerator (10), der dafür konfiguriert ist, durch die Drehung des Rotors (3) angetrieben zu werden, und einen automatischen Spannungsregler zum Steuern einer Anschlussspannung des Synchrongenerators (10) durch Justieren einen Feldstromes des Synchrongenerators (10),

wobei die charakteristischen Punkte eine Temperatur einer Wicklung des Synchrongenerators (10), eine Spannung des automatischen Spannungsreglers, einen elektrischen Strom des automatischen Spannungsreglers, eine Feldspannung des Synchrongenerators (10) und eine Umgebungstemperatur enthalten, und

wobei der Anomaliebestimmungsteil (43) dafür konfiguriert ist, eine Anomalie des Synchrongenerators (10) zu bestimmen.

13. Diagnosesystem für eine Windkraftstromerzeugungsanlage (1) nach einem der Ansprüche 1 bis 12,

wobei die Windkraftstromerzeugungsanlage (1) einen Rotor (3), der mehrere Windturbinenflügel (2) enthält, und einen Generator (10), der dafür konfiguriert ist, durch die Drehung des Rotors (3) angetrieben zu werden, enthält,

wobei die charakteristischen Punkte eine Temperatur eines Generatorlagers, das eine Drehwelle des Generators (10) drehbar stützt, Vibrationsinformationen des Generatorlagers und eine Umgebungstemperatur enthalten,

wobei die Vibrationsinformationen mindestens eines von Folgendem enthalten:

einen Beschleunigungspegel des Generatorlagers, der als eine Signalstärke einer Frequenz, die einem integralen Vielfachen einer Drehzahl der Drehwelle des Generators entspricht, eines fünften Signals definiert ist, das durch Frequenzanalyse eines Beschleunigungssignals des Generatorlagers erhalten wird,

einen Hüllkurvenpegel des Generatorlagers, der als eine Signalstärke einer Frequenz, die einem integralen Vielfachen der Drehzahl der Drehwelle des Generators (10) entspricht, eines sechsten Signals definiert ist, das durch Frequenzanalyse eines Hüllkurvensignals erhalten wird, das Spitzen des Beschleunigungssignals des Generatorlagers verbindet,

einen Gesamtwert eines siebenten Signals, das durch Frequenzanalyse eines Radialgeschwindigkeitsignals des Generatorlagers erhalten wird, oder

einen Gesamtwert eines achten Signals, das durch Frequenzanalyse eines Radialbeschleunigungssignals des Generatorlagers erhalten wird, und

wobei der Anomaliebestimmungsteil (43) dafür konfiguriert ist, eine Anomalie des Generatorlagers zu bestimmen.

14. Diagnosesystem für eine Windkraftstromerzeugungsanlage (1) nach einem der Ansprüche 1 bis 13,

wobei der Datensatzerfassungsteil dafür konfiguriert ist, die Datensätze in der Zeitraumeinheit eines Bereichs von 1 bis 60 Minuten oder bevorzugt von ungefähr 10 Minuten zu erhalten, und

wobei der Abweichungsindexwertberechnungsteil (42) dafür konfiguriert ist, einen Analysewert, der den Abweichungsindexwert enthält, in einem Bereich von 30 bis 600 Minuten oder bevorzugt in eine Zeitraum von 60 Minuten unter Verwendung des Zieldatensatzes zu berechnen, der unter den mehreren Datensätzen, die über die Zeitraumeinheit zum Erfassen der Datensätze erhalten wurden, durch den Zieldatensatzauswahlteil ausgewählt wird.

15. Diagnoseverfahren zum Beurteilen der Integrität einer Windkraftstromerzeugungsanlage (1), **dadurch gekennzeichnet, dass** es umfasst:

einen Datensatzerfassungsschritt zum Erhalten, für jede Zeitraumeinheit, mehrerer Datensätze, die jeweils durch eine Kombination charakteristischer Werte gebildet werden, die Indizes mehrerer charakteristischer Punkte sind, die mit einem Betriebszustand der Windkraftstromerzeugungsanlage (1) korreliert sind,

einen Klassifizierungsschritt zum Klassifizieren mindestens eines Teils der mehreren Datensätze in der Zeitraumeinheit in Klassen eines Parameters, der eine Ausgangsleistung der Windkraftstromerzeugungsanlage (1) angibt,

einen Mittelwertverarbeitungsschritt zum Mitteln der Datensätze, die in dem Klassifizierungsschritt in jede der Klassen klassifiziert wurden, und zum Berechnen eines mittleren Datensatzes für jede der Klassen,

einen Abweichungsindexwertberechnungsschritt zum Berechnen, für jede der Klassen, eines Abweichungsindexwertes, der eine Abweichung des mittleren Datensatzes von einem Referenzdatensatz angibt, der durch eine Kombination der charakteristischen Werten der Zeit gebildet wird, wenn die Windkraftstromerzeugungsanlage (1) in einem normalen Zustand ist, und

einen Anomaliebestimmungsschritt zum Bestimmen, dass eine Anomalie in der Windkraftstromerzeugungsanlage (1) in der Zeitraumeinheit aufgetreten ist, wenn der Abweichungsindexwert größer ist als ein Schwellenwert in mindestens einer der Klassen.

## Revendications

1. Système de diagnostic destiné à évaluer l'intégrité d'une installation de génération d'énergie éolienne (1), **caractérisé en ce qu'**il comporte :

une partie d'acquisition d'ensemble de données (22) configurée pour obtenir, pour chaque période d'unité, une pluralité d'ensembles de données constitués chacun par une combinaison de valeurs caractéristiques qui sont des indices d'une pluralité d'éléments caractéristiques corrélés à un état de fonctionnement de l'installation de génération d'énergie éolienne (1) ;

une partie de classement (26) configurée pour classer au moins une partie de la pluralité d'ensembles de données pendant la période d'unité en classes d'un paramètre indiquant une sortie de l'installation de génération d'énergie éolienne (1) ;

une partie de traitement de moyenne (28) configurée pour faire la moyenne des ensembles de données classés dans chacune des classes par la partie de classement, et qui calcule un ensemble de données moyen pour chacune des classes ;

une partie de calcul de valeur d'indice d'écart (42) configurée pour calculer, pour chacune des classes, une valeur d'indice d'écart indiquant un écart de l'ensemble de données moyen par rapport à un ensemble de données de référence qui est constitué par une combinaison des valeurs caractéristiques du moment où l'installation de génération d'énergie éolienne (1) est dans un état normal ; et

une partie de détermination d'anomalie (43) configurée pour déterminer qu'une anomalie s'est produite dans l'installation de génération d'énergie éolienne (1) pendant la période d'unité, si la valeur d'indice d'écart est plus grande qu'une valeur de seuil dans au moins une des classes.

2. Système de diagnostic pour une installation de génération d'énergie éolienne (1) selon la revendication 1, dans lequel l'ensemble de données de référence est classé dans les classes du paramètre et fait l'objet d'une moyenne dans chacune des classes du paramètre, et

dans lequel la partie de calcul de valeur d'indice d'écart (42) est configurée pour calculer, pour chacune des classes, la valeur d'indice d'écart indiquant l'écart de l'ensemble de données moyen par rapport à l'ensemble de données de référence, l'ensemble de données moyen et l'ensemble de données de référence appartenant à la même classe.

3. Système de diagnostic pour une installation de génération d'énergie éolienne (1) selon la revendication 1 ou 2, comportant en outre

une partie de sélection d'ensemble de données de cible (24) configurée pour exclure la pluralité d'ensembles de données appartenant à une période d'unité hors cible comprenant des ensembles de données qui ne remplissent pas une première condition de détermination constituée par au moins une de la condition suivante (A) ou (B), et pour sélectionner un ensemble de données de cible qui appartient à une période d'unité de cible dans laquelle tous les ensembles de données remplissent la première condition de détermination,

dans lequel la partie de classement (26) est configurée pour classer seulement l'ensemble de données de cible parmi la pluralité d'ensembles de données en classes du paramètre,

dans lequel la condition (A) est une condition telle qu'une vitesse de rotation de rotor $\omega_r$ de l'installation de génération d'énergie éolienne (1) n'est pas inférieure à une valeur de seuil $\omega_{r\_th}$, la valeur de seuil $\omega_{r\_th}$ n'étant pas inférieure à la vitesse de rotation de rotor à la vitesse de vent de coupure $\omega_{r0}$ et inférieure à la vitesse de rotation nominale $\omega_{r\_rated}$, et

dans lequel la condition (B) est une condition telle qu'une vitesse de rotation de génératrice $\omega_g$ de l'installation de génération d'énergie éolienne (1) n'est pas inférieure à une valeur de seuil $\omega_{g\_th}$ qui n'est pas supérieure à vitesse de rotation de génératrice $\omega_{g0}$ lors du raccordement d'une génératrice à un réseau.

**4.** Système de diagnostic pour une installation de génération d'énergie éolienne (1) selon la revendication 3, dans lequel l'ensemble de données de référence satisfait au moins de la condition (A) ou (B).

**5.** Système de diagnostic pour une installation de génération d'énergie éolienne (1) selon la revendication 3 ou 4, dans lequel la partie de sélection d'ensemble de données de cible (24) est configurée pour sélectionner, comme ensemble de données de cible, un ensemble de données dans la période d'unité de cible pendant laquelle tous les ensembles de données remplissent une deuxième condition de détermination constituée par au moins une de la condition (C) ou (D) en plus de la première condition de détermination,
dans lequel la condition (C) est une condition telle que l'installation de génération d'énergie éolienne (1) n'est pas sous une limitation temporelle de sortie, et
dans lequel la condition (D) est une condition telle qu'un taux de variation de température d'une section de l'installation de génération d'énergie éolienne (1) indiquant un changement de température correspondant à l'état de fonctionnement de l'installation de génération d'énergie éolienne n'est pas supérieur à une valeur de seuil.

**6.** Système de diagnostic pour une installation de génération d'énergie éolienne (1) selon l'une quelconque des revendications 1 à 5,
dans lequel la partie de calcul de valeur d'indice d'écart (42) est configurée pour calculer, comme valeur d'indice d'écart, une distance de Mahalanobis d'un espace de signal constitué par l'ensemble de données de cible d'un espace d'unité constitué par l'ensemble de données de référence, et
dans lequel la partie de détermination d'anomalie (43) est configurée pour déterminer si une anomalie de l'installation de génération d'énergie éolienne (1) est présente pendant la période d'unité de cible sur la base de la distance de Mahalanobis.

**7.** Système de diagnostic pour une installation de génération d'énergie éolienne (1) selon l'une quelconque des revendications 1 à 6, comportant en outre
une partie de calcul de taux de contribution (44) configurée pour calculer une valeur d'indice d'écart d'analyse qui indique un écart d'un ensemble de données de cible d'analyse constitué par une combinaison des valeurs caractéristiques des éléments caractéristiques autres qu'au moins un élément caractéristique focalisé parmi les valeurs caractéristiques constituant l'ensemble de données de cible d'un ensemble de données de référence d'analyse constitué par une combinaison des valeurs caractéristiques des éléments caractéristiques autres que l'élément caractéristique focalisé des valeurs caractéristiques constituant l'ensemble de données de référence, et pour calculer un taux de cotisation de chacun des éléments caractéristiques par rapport à la valeur d'indice d'écart basée sur un rapport de la valeur d'indice d'écart d'analyse sur la valeur d'indice d'écart ; et
une partie de détermination de cause d'anomalie (45) configurée pour spécifier l'élément caractéristique qui est une cause de l'anomalie parmi la pluralité d'éléments caractéristiques sur la base du taux de cotisation calculé par la partie de calcul de taux de contribution (44), si l'on détermine qu'il y a l'anomalie dans l'installation de génération d'énergie éolienne (1) grâce à la partie de détermination d'anomalie (43).

**8.** Système de diagnostic pour une installation de génération d'énergie éolienne (1) selon la revendication 7, comportant en outre :

une partie de calcul de composante DM (46) destinée à calculer une composante de distance de Mahalanobis de chacun des éléments caractéristiques sur la base de la distance de Mahalanobis calculée par la partie de calcul de valeur d'indice d'écart (42) et le taux de cotisation de chacun des éléments caractéristiques calculés par la partie de calcul de taux de contribution (44) ; et
une partie d'affichage destinée à afficher une modification de série chronologique de la composante de distance de Mahalanobis de chacun des éléments caractéristiques calculés par la partie de calcul de composante DM (46).

**9.** Système de diagnostic pour une installation de génération d'énergie éolienne (1) selon l'une quelconque des revendications 1 à 8,
dans lequel l'installation de génération d'énergie éolienne (1) comprend en outre un rotor (3) comprenant une pluralité de pales d'éolienne (2), une génératrice (10) configurée pour être entraînée par la rotation du rotor (3), et une transmission (9) destinée à transmettre la rotation du rotor (3) à la génératrice (10),
dans lequel les éléments caractéristiques comprennent une vitesse de vent, une sortie de fin de transmission de la génératrice (10), une vitesse de rotation du rotor (3), et des angles de pas des pales d'éolienne (2), et
dans lequel la partie de détermination d'anomalie (43) est configurée pour déterminer une anomalie au moins d'un du rotor (3), de la transmission (9), ou de la génératrice (10).

10. Système de diagnostic pour une installation de génération d'énergie éolienne (1) selon l'une quelconque des revendications 1 à 9,

dans lequel l'installation de génération d'énergie éolienne (1) comprend un rotor (3) comprenant une pluralité de pales d'éolienne (2), une génératrice (10) configurée pour être entraînée par la rotation du rotor (3), et un dispositif d'actionnement destinés à commander des angles de pas des pales d'éolienne (2),

dans lequel les éléments caractéristiques comprennent une température du dispositif d'actionnement, une sortie de fin de transmission de la génératrice (10) et une température ambiante, et

dans lequel la partie de détermination d'anomalie (43) est configurée pour déterminer une anomalie du dispositif d'actionnement.

11. Système de diagnostic pour une installation de génération d'énergie éolienne (1) selon l'une quelconque des revendications 1 à 10,

dans lequel l'installation de génération d'énergie éolienne (1) comprend un rotor (3) comprenant une pluralité de pales d'éolienne (2), une génératrice (10) configurée pour être entraînée par la rotation du rotor (3), un arbre principal (6) relié au rotor (3) et configuré pour transmettre la rotation du rotor (3) à la génératrice (10), et un palier principal (7) configuré pour supporter l'arbre principal (6) de façon rotative,

dans lequel les éléments caractéristiques comprennent une température du palier principal (7), une information de vibration du palier principal (7) et une température ambiante,

dans lequel l'information de vibration comprend au moins un de :

un niveau d'accélération du palier principal (7) défini comme une intensité de signal d'une fréquence correspondant à un multiple intégral d'une vitesse de rotation de l'arbre principal (6), d'un premier signal obtenu par une analyse de fréquence d'un signal d'accélération du palier principal (7) ;

un niveau de courbe d'enveloppe du palier principal (7) défini comme une intensité de signal de la fréquence correspondant au multiple intégral de la vitesse de rotation de l'arbre principal (6), d'un deuxième signal obtenu par une analyse de fréquence d'un signal de courbe d'enveloppe qui relie des crêtes du signal d'accélération du palier principal (7) ;

une valeur globale d'un troisième signal obtenu par une analyse de fréquence d'un signal de vitesse radiale du palier principal (7) ; ou

une valeur globale d'un quatrième signal obtenu par une analyse de fréquence d'un signal d'accélération radiale du palier principal (7), et

dans lequel la partie de détermination d'anomalie (43) est configurée pour déterminer une anomalie du palier principal (7).

12. Système de diagnostic pour une installation de génération d'énergie éolienne (1) selon l'une quelconque des revendications 1 à 11,

dans lequel l'installation de génération d'énergie éolienne (1) comprend un rotor (3) comprenant une pluralité de pales d'éolienne (2), une génératrice synchrone (10) configurée pour être entraînée par la rotation du rotor (3), et un régulateur de tension automatique destiné à commander une tension de borne de la génératrice synchrone (10) en ajustant un courant de champ de la génératrice synchrone (10),

dans lequel les éléments caractéristiques comprennent une température d'un enroulement de la génératrice synchrone (10), une tension du régulateur de tension automatique, un courant électrique du régulateur de tension automatique, une tension de champ de la génératrice synchrone (10) et une température ambiante, et

dans lequel la partie de détermination d'anomalie (43) est configurée pour déterminer une anomalie de la génératrice synchrone (10).

13. Système de diagnostic pour une installation de génération d'énergie éolienne (1) selon l'une quelconque des revendications 1 à 12,

dans lequel l'installation de génération d'énergie éolienne (1) comprend un rotor (3) comprenant une pluralité de pales d'éolienne (2), et une génératrice (10) configurée pour être entraînée par la rotation du rotor (3),

dans lequel les éléments caractéristiques comprennent une température d'un palier de génératrice supportant de façon rotative un arbre de rotation de la génératrice (10), une information de vibration du palier de génératrice et une température ambiante,

dans lequel l'information de vibration comprend au moins un de :

un niveau d'accélération du palier de génératrice défini comme une intensité de signal d'une fréquence correspondant à un multiple intégral d'une vitesse de rotation de l'arbre de rotation de la génératrice, d'un cinquième signal obtenu par analyse de fréquence d'un signal d'accélération du palier de génératrice ;

un niveau de courbe d'enveloppe du palier de génératrice défini comme une intensité de signal d'une fréquence correspondant à un multiple intégral de la vitesse de rotation de l'arbre de rotation de la génératrice (10), d'un sixième signal obtenu par analyse de fréquence d'un signal de courbe d'enveloppe qui relie des crêtes du signal d'accélération du palier de génératrice ;

une valeur globale d'un septième signal obtenu par analyse de fréquence d'un signal de vitesse radiale du palier de génératrice ; ou

une valeur globale d'un huitième signal obtenu par analyse de fréquence d'un signal d'accélération radiale du palier de génératrice, et

dans lequel la partie de détermination d'anomalie (43) est configurée pour déterminer une anomalie du palier de génératrice.

14. Système de diagnostic pour une installation de génération d'énergie éolienne (1) selon l'une quelconque des revendications 1 à 13,

dans lequel la partie d'acquisition d'ensemble de données est configurée pour obtenir les ensembles de données pendant la période d'unité d'une plage de 1 à 60 minutes, ou de préférence, d'approximativement 10 minutes, et

dans lequel la partie de calcul de valeur d'indice d'écart (42) est configurée pour calculer une valeur d'analyse comprenant la valeur d'indice d'écart dans une plage de 30 à 600 minutes ou, de préférence, dans une période de 60 minutes, utilisant l'ensemble de données de cible choisi parmi la pluralité d'ensembles de données obtenus au cours de la période d'unité pour acquérir les ensembles de données grâce à la partie de sélection d'ensemble de données de cible.

15. Procédé de diagnostic destiné à évaluer l'intégrité d'une installation de génération d'énergie éolienne (1), **caractérisé en ce qu'**il comporte :

une étape d'acquisition d'ensemble de données destinée à obtenir, pour chaque période d'unité, une pluralité d'ensembles de données constitués chacun par une combinaison de valeurs caractéristiques qui sont des indices d'une pluralité d'éléments caractéristiques corrélés à un état de fonctionnement de l'installation de génération d'énergie éolienne (1) ;

une étape de classement destinée à classer au moins une partie de la pluralité d'ensembles de données pendant la période d'unité en classes d'un paramètre indiquant une sortie de l'installation de génération d'énergie éolienne (1) ; ;

une étape de traitement de moyenne destinée à faire la moyenne des ensembles de données classés dans chacune des classes dans l'étape de classement, et à calculer un ensemble de données moyen pour chacune des classes ;

une étape de calcul de valeur d'indice d'écart destinée à calculer, pour chacune des classes, une valeur d'indice d'écart indiquant un écart de l'ensemble de données moyen par rapport à un ensemble de données de référence qui est constitué par une combinaison des valeurs caractéristiques du moment où l'installation de génération d'énergie éolienne (1) est dans un état normal ; et

une étape de détermination d'anomalie destinée à déterminer qu'une anomalie s'est produite dans l'installation de génération d'énergie éolienne (1) pendant la période d'unité, si la valeur d'indice d'écart est plus grande qu'une valeur de seuil dans au moins une des classes.

# FIG. 1

# FIG. 2

**20**
- Dataset acquisition part — 22
- Target-dataset selection part — 24
- Classification part — 26
- Mean processing part — 28

**30**
- Reference-dataset acquisition part — 32
- Reference-dataset selection part — 34
- Reference-dataset classification part — 36
- Reference-dataset mean processing part — 38

**40**
- Deviation index value calculation part — 42
- Abnormality determination part — 43
- Contribution-rate calculation part — 44
- Abnormality-cause determination part — 45
- MD-component calculation part — 46
- Display part — 47

**100**

FIG. 3

| No. | Data | Unit |
|-----|------|------|
| 1 | Generator rotation speed | [rpm] |
| 2 | Generator output | [kW] |
| 3 | Wind velocity | [m/s] |
| 4 | Pitch angle (1st blade) | [deg] |
| 5 | Pitch angle (2nd blade) | [deg] |
| 6 | Pitch angle (3rd blade) | [deg] |

# FIG. 4

# FIG. 5

| BIN range (BIN$_j$) | Dataset No [-] | Unit period T$_i$ | Number of data [-] | Mean dataset D$_{ij}$ | Reference dataset D$_{ref\_j}$ | Rotation speed [rpm] | Output [kW] | Wind velocity [m/sec] | Pitch angle 1 [deg] | Pitch angle 2 [deg] | Pitch angle 3 [deg] |
|---|---|---|---|---|---|---|---|---|---|---|---|
| 【700kW】 from 650kW under 750kW (BIN$_1$) | 1 | T$_1$ | 1692 | D$_{11}$ | | 1011.9 | 698.0 | 7.1 | 20.9 | 20.9 | 20.9 |
| | 2 | T$_2$ | 990 | D$_{21}$ | | 1011.1 | 696.1 | 7.0 | 20.9 | 20.9 | 20.9 |
| | 3 | T$_3$ | 807 | D$_{31}$ | D$_{ref\_1}$ | 1009.0 | 693.0 | 7.0 | 20.9 | 20.9 | 20.9 |
| | 4 | T$_4$ | 802 | D$_{41}$ | | 1015.9 | 700.2 | 7.0 | 20.9 | 20.9 | 20.9 |
| | 5 | T$_5$ | 765 | D$_{51}$ | | 1007.2 | 689.4 | 7.3 | 20.9 | 20.9 | 20.9 |
| 【800kW】 from 750kW under 850kW (BIN$_2$) | 6 | T$_1$ | 778 | D$_{12}$ | | 1056.9 | 806.7 | 7.4 | 20.9 | 20.9 | 20.9 |
| | 7 | T$_2$ | 767 | D$_{22}$ | | 1055.3 | 800.1 | 7.2 | 20.9 | 20.9 | 20.9 |
| | 8 | T$_3$ | 699 | D$_{32}$ | D$_{ref\_2}$ | 1055.4 (1095.9) | 798.1 | 7.5 | 20.9 | 20.9 | 20.9 |
| | 9 | T$_4$ | 659 | D$_{42}$ | | 1058.6 | 802.1 | 7.2 | 20.9 | 20.9 | 20.9 |
| | 10 | T$_5$ | 657 | D$_{52}$ | | 1053.1 | 791.2 | 7.4 | 20.9 | 20.9 | 20.9 |
| 【900kW】 from 850kW under 950kW (BIN$_3$) | 11 | T$_1$ | 1401 | D$_{13}$ | | 1098.6 | 902.2 | 7.5 | 20.9 | 20.9 | 20.9 |
| | 12 | T$_2$ | 1087 | D$_{23}$ | | 1095.9 | 902.6 | 7.6 | 20.9 | 20.9 | 20.9 |
| | 13 | T$_3$ | 702 | D$_{33}$ | D$_{ref\_3}$ | 1095.6 | 899.1 | 7.5 | 20.9 | 20.9 | 20.9 |
| | 14 | T$_4$ | 639 | D$_{43}$ | | 1097.6 | 899.1 | 7.7 | 20.9 | 20.9 | 20.9 |
| | 15 | T$_5$ | 542 | D$_{53}$ | | 1094.6 | 900.1 | 7.7 | 20.9 | 20.9 | 20.9 |
| 【1000kW】 from 950kW under 1050kW (BIN$_4$) | 16 | T$_1$ | 1421 | D$_{14}$ | | 1136.0 | 999.2 | 7.8 | 21.1 | 20.9 | 20.7 |
| | 17 | T$_2$ | 1294 | D$_{24}$ | | 1132.7 | 995.0 | 8.0 | 20.9 | 20.9 | 20.9 |
| | 18 | T$_3$ | 771 | D$_{34}$ | D$_{ref\_4}$ | 1137.8 (1095.9) | 1005.2 | 7.7 | 21.2 | 20.9 | 20.6 |
| | 19 | T$_4$ | 535 | D$_{44}$ | | 1132.2 | 995.9 | 7.8 | 21.1 | 20.9 | 20.7 |
| | 20 | T$_5$ | 524 | D$_{54}$ | | 1137.6 | 1000.7 | 8.0 | 20.9 | 20.9 | 20.9 |
| 【1100kW】 from 1050kW under 1150kW (BIN$_5$) | 21 | T$_1$ | 1382 | D$_{15}$ | | 1172.8 | 1099.8 | 8.1 | 21.4 | 21.0 | 20.4 |
| | 22 | T$_2$ | 876 | D$_{25}$ | | 1173.0 | 1104.0 | 8.3 | 20.9 | 20.9 | 20.9 |
| | 23 | T$_3$ | 869 | D$_{35}$ | D$_{ref\_5}$ | 1171.4 | 1097.1 | 8.1 | 21.4 | 20.9 | 20.4 |
| | 24 | T$_4$ | 614 | D$_{45}$ | | 1173.7 | 1098.8 | 8.2 | 20.9 | 20.9 | 20.9 |
| | 25 | T$_5$ | 504 | D$_{55}$ | | 1171.1 | 1100.5 | 8.2 | 21.3 | 20.9 | 20.5 |

EP 3 043 066 B1

# FIG. 6

Unit-space data

|  | Item 1 | Item 2 | · · · | Item n |
|---|---|---|---|---|
| data(1) | $X_{11}$ | $X_{21}$ | · · · | $X_{n1}$ |
| data(2) | $X_{12}$ | $X_{22}$ | · · · | $X_{n2}$ |
| · · · | · · · | · · · | · | · · · |
| data(k) | $X_{1k}$ | $X_{2k}$ | · · · | $X_{nk}$ |

# FIG. 7

Signal-space data

|  | Item 1 | Item 2 | $\cdots$ | Item n |
|---|---|---|---|---|
| data(1) | $Y_{11}$ | $Y_{21}$ | $\cdots$ | $Y_{n1}$ |
| data(2) | $Y_{12}$ | $Y_{22}$ | $\cdots$ | $Y_{n2}$ |
| . | . | . | . | . |
| . | . | . | . | . |
| . | . | . | . | . |
| data(l) | $Y_{1l}$ | $Y_{2l}$ | $\cdots$ | $Y_{nl}$ |

# FIG. 8

Mahalanobis distance (MD²)

# FIG. 9

EP 3 043 066 B1

| Validation No. | Item 1 | Item 2 | Item 3 | $MD^2$ value | SN ratio | Note |
|---|---|---|---|---|---|---|
| Validation 1 | ○ | ○ | ○ | $D^2/3$ | $\eta$ | Normal $MD^2$ value calculated using all items |
| Validation 2 | × | ○ | ○ | $D^2/2$ | $\eta'_1$ | Focused characteristic item is Item 1 |
| Validation 3 | ○ | × | ○ | $D^2/2$ | $\eta'_2$ | Focused characteristic item is Item 2 |
| Validation 4 | ○ | ○ | × | $D^2/2$ | $\eta'_3$ | Focused characteristic item is Item 3 |

FIG. 10

**EP 3 043 066 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009016020 A
- JP 5101396 B